# EUROPÄISCHE PATENTANMELDUNG

(11) **EP 0 618 394 A2**
(43) Veröffentlichungstag der Anmeldung: **05.10.1994**
(21) Anmeldenummer: 94103884.6
(22) Anmeldetag: 14.03.1994
(51) Int. Cl.: F16L 37/084

(54) **Verriegelungseinrichtung an Steckkupplungen**

(30) Priorität: 02.04.1993 DE 4310817
(71) Anmelder: CARL KURT WALTHER GmbH & Co. KG, D-42327 Wuppertal (DE)
(72) Erfinder: Ricken, Norbert, Dipl.-Ing., D-44797 Bochum (DE); Kaul, Wolfgang, Dr., D-42369 Wuppertal (DE)
(74) Vertreter: Rieder, Hans-Joachim, Dr.

(57) **Zusammenfassung**

Die Erfindung bezieht sich auf eine Verriegelungseinrichtung (V) an Steckkupplungen für Rohre, Schläuche (1) oder dergleichen, bei welcher das Patrizenteil (P, Stecknippel 3) in Einsteckposition eine Öffnung (8) einer im Matrizenteil (M, Kupplungsgehäuse 6) abgefedert verlagerbaren Verriegelungsplatte (4) (4) durchsetzt und durch Angriff der Öffnungsrandkante (9) auf der Mantelfläche (10) des Patrizenteils (P) verriegelt ist, und schlägt zur Erzielung einer sicheren, von Lenkkräften freien Verriegelung eine gelenkzapfenfreie Velagerung der Verriegelungsplatte (4) in die Verriegelungsstellung vor.

## Beschreibung

Die Erfindung bezieht sich auf eine Verriegelungseinrichtung an Steckkupplungen für Rohre, Schläuche oder dergleichen, bei welcher das Patrizenteil (Stecknippel) in Steckposition durch eine Öffnung eine im Matrizenteil (Kupplungsgehäuse) abgefedert verlagerbare Verriegelungsplatte durchsetzt und durch Angriff der Öffnungsrandkante auf der Mantelfläche des Patrizenteils verriegelt ist.

Durch die DE-PS 28 13 285 ist ein Rohrverbinder bekannt. Dessen Kupplungsgehäuse enthält eine um einen Zapfen schwenkbar gelagerte Verriegelungsplatte. Die steht in Richtung ihrer Grundstellung unter Federbelastung. Die Öffnung der Verriegelungsplatte läßt sich handhebelbetätigbar konzentrisch auf die Öffnung des Kupplungsgehäuses ausrichten. Dadurch kann das Rohr eines zu prüfenden Bauteils eingeführt werden. Durch Loslassen der Verriegelungsplatte tritt diese aus ihrer Normallage, d.h. quer zur Längsachse der Steckkupplung, in eine Kipplage. Die Öffnungsrandkante der Verriegelungsplatte kommt so mit einer Messerkante mit dem Rohr in Eingriff. Besagte Zapfenlagerung der Verriegelungsplatte führt zu Querbelastungen im Kupplungsbereich zwischen dem Rohr und dem Kupplungsgehäuse. Solche Verkippungsbelastungen setzen sich bis in den Bereich eines gehäuseinnenseitigen Dichtungsringes fort. Das kann die erstrebte Dichtwirkung nachteilig beeinflussen.

Aufgabe der Erfindung ist es, eine gattungsgemäße Verriegelungseinrichtung zu schaffen, die, von Lenkkräften frei, eine sichere Verrieglung bringt.

Gelöst ist diese Aufgabe durch die im Anspruch 1 angegebene Erfindung.

Die Unteransprüche sind vorteilhafte Weiterbildungen der Verriegelungseinrichtung.

Zufolge solcher Ausgestaltung ist eine gattungsgemäße Verriegelungseinrichtung erhöhten Gebrauchs- und Sicherheitswertes erzielt: Der Kräftefluß auf die Dichtungszone ist unterbrochen bzw. wesentlich reduziert. Erreicht ist das durch eine gelenkzapfenfreie Verlagerung der Verriegelungsplatte in die Verriegelungsstellung. Es treten keine Lenkkräfte mehr auf. Die Verriegelungsplatte stellt sich selbst auf den Weg der Lochfindung ein. Es ist praktisch eine schwimmende Zuordnung der Verriegelungsplatte erreicht. Sei es, daß, wie konkret vorgeschlagen, eine gelenkzapfenfreie Kippverlagerung der Verriegelungsplatte in die Verriegelungsstellung angewandt wird oder alternativ eine gelenkzapfenfreie Schiebeverlagerung der Verriegelungsplatte, dies in einem Querschacht des Matrizenteil-Kupplungsgehäuses. Die erstgenannte Verriegelungseinrichtung kann rein klemmtechnisch wirken. Aufgrund der freien Einlagerung der Verriegelungsplatte kämen dabei sogar zwei diametral einander gegenüberliegende Partien der Öffnungsrandkante in Angriff. Die gelenkfreie Kippverlagerung läßt eine entsprechende, zur Kippverlagerung hinzukommende Schiebeverlagerung überlagernd zu. Aber auch bei der zweiten Lösung würden keine Zwangssteuerkräfte aufkommen, da die Schiebeverlagerung durch den Querschacht ihre Grundausrichtung erfährt, im übrigen aber das Patrizenteil abtastend in die verriegelungsaktive Stellung träte. Hier könnte sogar eine Fallenwirkung zugrundeliegen. Weiter erweist es sich als vorteilhaft, daß die Verriegelungsplatte von einer im Matrizenteil angeordneten, patrizenteildurchsetzten Druckfeder abgestützt und gegen einen Anschlag gehalten bzw. gedrückt ist, der eine spitzwinklige Stellung der Ebene der Verriegelungsplatte zur Längsachse des Matrizenteils erzwingt, derart, daß die Öffnung der Verriegelungsplatte noch fluchtet zu einem verjüngten Einsteckquerschnitt des Patrizenteils. Auf diese Weise ist nicht nur der ohnehin vorhandene Freiraum innerhalb der Druckfeder, gedacht ist an eine Schraubengang-Druckfeder, genutzt; vielmehr tritt auch der Vorteil der peripheren Windungsaufbauschung an der der Abstützung abgewandten Seite auf, eben mit dem Ziel der federbelasteten Kippstellung zur Normallage der Verriegelungsplatte. Der vorrangige Einlauf eines verjüngten Einsteckquerschnitts erleichtert die Lochfindung und leitet schon gleich im Anfangsstadium der Herbeiführung der Steckkupplung die koaxiale Ausrichtung von Patrizenteil und Matrizenteil ein. Bezüglich der druckfeder hat es sich als vorteilhaft herausgestellt, daß diese exzentrisch zur Längsachse des Matrizenteils liegt. Das ist vor allem kräftegünstig, wenn so die Druckfeder aus dem Bereich der erwähnten Abstützung verlegt ist. So treten im Hinblick auf die erstrebte Kippstellung keinerlei Gegenkräfte auf. Der Federkörper wirkt ausschließlich in Kipprichtung. Weiter erweist es sich als vorteilhaft, daß die Öffnungsrandkanten sich unter teilweiser Verlagerung der Verriegelungsplatte am Anschlag auf der Mantelfläche des Patrizenteils verkrallen. Bei Trennkräften durch entgegengerichteten Zug an der Steckkupplung und/oder durch Mediendruck tritt nur noch eine stärkere Klemmwirkung auf. Das ist eine ideale Basis für eine irreversible Kupplung. Überdies erweist es sich als günstig, daß der Verkrallungsbereich von einem Mittelabschnitt des Patrizenteils gebildet ist, der sich stufenförmig vom den verjüngten Einsteckquerschnitt bildenden Endabschnitt in einen Anschlußabschnitt des Patrizenteils absetzt. Zuordnungstechnisch erweist es sich als günstig, daß die Übergangsstufe vom Mittelabschnitt zum Anschlußabschnitt sich an der Randkante der Einstecköffnung des Matrizenteils zentriert. Auch diese Maßnahme hält Verkippungskräfte vom Dichtungsbereich fern und bildet im übrigen ein Indiz dafür, daß die maximale Einstecktiefe des Patrizenteils erreicht ist. Weiter besteht eine vorteilhafte Variante darin, daß der Mittelabschnitt mit Verriegelungsstufen ausgestattet ist. Solche Stufen ermöglichen neben der verkrallenden Verriegelungswirkung auch noch eine formschlüssige Verriegelung. Baulich ist dazu so vorgegangen, daß die Verriegelungsstufen einen kegelstumpfförmigen Zwischenabschnitt belassen. Neben der tragenden Wirkung solcher Verriegelungsstufen kann am kegelstumpfförmigen Zwischenabschnitt selbst die verkrallende Wirkung entstehen, dies sogar dann gegen eine steilere Flanke als sie beispielsweise ein zylindrischer Mittelabschnitt brächte. Günstig ist es auch, daß die Verriegelungsstufen einen trapezförmigen Zwischenabschnitt belassen, dessen axial gerichteter Verlauf der Mantelwand sich aus drei trapezförmig zueinanderstehenden Flanken zusammensetzt. Das eröffnet in vorteilhafter Weise die Möglichkeit, zwei diametral einander gegenüberliegende Öffnungsrandkanten formschlüssig eintreten zu lassen. Gleiches ist auch erzielt, wenn die Verriegelungsstufen einen gewölbten Zwischenabschnitt belassen. Eine satte Abstützung wird dabei erreicht, wenn die eine Verriegelungsstufe der Kippstellung der Verriegelungsplatte entsprechend geneigt verläuft. Hierdurch läßt sich der Öffnungsrand in die Abstützung recht großflächig tragend einbeziehen. Eine gute Abstützung/Verkrallung ergibt sich aber auch, wenn die Randkante der Öffnung der Verriegelungsplatte mit einem Teilabschnitt jenseits der Stufe liegt, beispielsweise angreifend mit der einen Verriegelungsstufe am zylindrischen Mittelabschnitt. Um den Federkörper der Druckfeder noch stärker auf die Belange der spitzwinkligen Stellung, sprich Kippstellung, der Verriegelungsplatte abzustimmen, wird so vorgegangen, daß der eine Endgang der Druckfeder entsprechend der spitzwinkligen Stellung der Verriegelungsplatte ausgerichtet verläuft. Das kann durch entsprechende Überhöhung der dortigen Endwindung geschehen oder aber auch dadurch, daß ein Rest der Windung am der Abstützung abgewandten Ende vorragend verläuft. Um die Steckkupplung reversibel auszubilden, bedarf es nur einer vergleichsweise unaufwendigen Maßnahme. Das wird erreicht durch eine der Verriegelungsplatte benachbart liegende Werkzeugeinstecköffnung des Matrizenteils. Über diese Einstecköffnung läßt sich mittels eines gängigen stäbchenartigen Gebildes (Nagel, Schraubendreher, Dorn etc.) die Verriegelungsplatte entgegen Federwirkung in Richtung der Normallage bewegen. Das unterbricht die Klemmwirkung. Das Patrizenteil läßt sich abziehen. Während die Einstecköffnung die erläuterte Möglichkeit nicht ohne weiteres erkennen läßt, kann hier sogar von einer Art Kindersicherung gesprochen werden. Soll dagegen die Aufhebbarkeit der Verriegelung erkennbar sein, wird so vorgegangen, daß der Verriegelungsplatte eine durch eine Öffnung des Matrizenteils nach außen reichende Betätigungshandhabe zugeordnet ist. Die Bedienungshandhabe ist zweckmäßig Teil einer der Verriegelungsplatte benachbarten Platte. Eine bevorzugte Maßnahme besteht jedoch darin, daß die Betätigungshandhabe-Platte als Verriegelungsplatte ausgebildet ist. Ist sie in dieser Form einer oder mehreren Verriegelungsplatten zugeordnet, so ergibt sich ein gleichwirkendes Verriegelungsplatten-Paket. Eine vorteilhafte Ausgestaltung wird dabei erreicht durch mehrere anliegend hintereinander angeordnete Verriegelungsplatten, derart, daß deren Öffnungsrandkanten sägezahnartig zueinander liegen. Eine solche sägezahnartige Verhakungsstruktur bringt eine Optimierung. Was nun die Form der Verriegelungsplatten anbetrifft, so erweist sich in aller Regel eine scheibchenförmige Gestalt als vorteilhaft, jedoch wird das Ziel auch durch eine unrunde Gestalt der Öffnungsränder und/oder der Umrißform der Verriegelungsplatte erreicht. Unrund bedeutet beispielsweise oval, viereckig und sogar U-förmig. Weiter ist es vor allem baulich von Vorteil, daß sich das der Verriegelungsplatte abgewandte Ende der Druckfeder an einer Trennwand abstützt, welche vor einer Dichtungskammer des Matrizenteils liegt. Dabei ergibt sich eine Doppelfunktion insofern, als dann auf der Rückseite der besagten Trennwand die Dichtung ihre lagegerechte Abstützung erfährt. Zurückkommend auf die Version der gelenkzapfenfreien Schieberverlagerung der Verriegelungseinrichtung erweist es sich als baulich vorteilhaft, daß die Verriegelungsplatte beiderends aus dem Querschacht herausragt und das eine, in Richtung der Längsachse des Matrizenteils abgewinkelte Ende sich auf der Mantelfläche des Matrizenteils federnd abstützt. Dieses abgewinkelte Ende kann so als Betätigungshandhabe dienen, während in vorteilhafter Weiterbildung das andere Ende eine umgebogene Fesselungsnase formt. Die Fesselungsplatte erfüllt so außer ihrer Grundbestimmung die weiteren Funktionen: Betätigungshandhabe, Befestigungsmittel, Rückholfeder. Die Erfindung bringt darüber hinaus in Vorschlag, daß die Öffnungsrandkante der im Querschacht verschieblichen Verriegelungsplatte gegen eine Stufe eines vorzugsweise kegelstumpfförmigen Aussteuerungsabschnitts des Patrizenteils tritt. Der kegelstumpfförmige Aussteuerungsabschnitt fungiert als der Stufe vorgelagerte, rotationssymmetrische Auflaufschräge. Auch erweist es sich in diesem Zusammenhang verriegelungstechnisch als vorteilhaft, daß die Kontur der Öffnung der Verriegelungsplatte nur über einen Teilumfang der Mantelflächenkrümmung des Patrizenteils entspricht und auf dem restlichen Abschnitt mit Abstand zur Mantelfläche verläuft, wobei der Abstand in Richtung der Federbelastung der Verriegelungsplatte liegt. Das führt zu einem etwa birnenförmigen Querschnitt mit Verriegelungs- und Freigabebereich. Auch ist es günstig, daß der verjüngte Endabschnitt des Patrizenteils sich in einer Zwischenhülse des Matrizenteils zentriert. Erreicht ist eine Grobzentrierung in dem Fall, in dem ein offener Ringquerschnitt für eine mediendruckbezogene Funkton erstrebt ist. Diese Vorgabe kommt bei einer Lösung von sogar eigenständiger Bedeutung zum Tragen, wenn, wie weiter vorgeschlagen, die Kippverlagerung der Verriegelungsplatte aus dem Druck des die Kupplung durchströmenden Mediums resultiert, und zwar entgegen einer schwächeren Druckfeder. Eine solche Ausgestaltung läßt die Entriegelung folglich erst dann zu, wenn der Mediendruck aufgehoben ist. Um dabei eine Selbstentriegelung, die in bestimmten Einsatzfällen der erfindungsgemäßen Steckkupplung durchaus von Bedeutung sein kann, zu vermeiden, wird weiter vorgeschlagen, daß eine druckmedienabhängig kippverlagerte Verriegelungsplatte axial nachgeordnet ist einer federbelasteten Verriegelungsplatte. Weiter ist es von Vorteil, daß die druckmedienabhängig verlagerbare Verriegelungsplatte sich einseitig an einem Anschlag einer Innenhülse des Matrizenteils abstützt und von mindestens einem druckmedienbeaufschlagten Verschiebeelement in Richtung einer Kippverlagerung um die Anschlaganlage belastet ist. Bei Nachlassen des Mediendrucks kippt die Verriegelungsplatte, durch die sie belastende Druckfeder veranlaßt, in die Normallage, d.h. die verkrallende Wirkung wird aufgehoben. Vorteilhaft ist es, wenn das Verschiebeelement zugleich eine Radialdichtung zwischen Matrizenteil und Patrizenteil ist. Optimiert ist diese Ausgestaltung durch zwei in der Innenhülse hintereinanderliegend angeordnete Dichtungsringe als Radialdichtung. Auch hier ergibt sich die Funktionskombination: kolbenartig wirkendes Verschiebeelement, Dichtungselement, Rückstellwirkung aufgrund der Flexibilität entsprechender Dichtungsringe, selbst wenn die Rückstellung als Kriechen auftritt. Weiter wird vorgeschlagen, daß die beiden Radialdichtungen in einer Kammer angeordnet sind, die eine durch Einziehung der Innenhülse gebildete Rückwand aufweist, welche Einziehung einen Spalt zum Endbereich des Patrizenteils beläßt. Über diesen Spalt wird der Mediendruck hinter der Rückwand, d.h. im Rücken der dortigen letzten Ringdichtung wirksam. Um die Rückstellung nicht oder nicht alleine der Rückholfeder zu überlassen, kann auch eine eine aktive Aufhebung bringende Vorkehrung getroffen sein, ohne die Teilezahl der erfindungsgemäßen Steckkupplung zu erhöhen. Erreicht ist das durch eine Stoßstufe am Patrizenteil zur Rückverlagerung der druckmedienabhängig kippbaren Verriegelungsplatte und Rückverlagerung des Verschiebeelements. Eine solche Stoßstufe ergibt sich praktisch schon durch die Querschnittsdifferenz zwischen dem Mittelabschnitt und dem Endabschnitt des Patrizenteils. Vorteilhaft ist es, daß die Stoßstufe mit Abstand von der Klemmstelle der druckmittelabhängig verlagerbaren Verriegelungsplatte am Patrizenteil liegt. Endlich ist es noch von Vorteil, daß die Verriegelungseinrichtung an einer Steckverschlußkupplung ausgebildet ist. Eine Variante der durch Mediendruck gespannten Verriegelungsplatte besteht darin, daß das Verschiebeelement (Ringdichtung) zwischen Verriegelungsplatten liegt. Das hat zugleich den Vorteil, daß die in Steckrichtung liegende, letzte Verriegelungsplatte zugleich als den zwischengefaßten Dichtring schonende Stützscheibe fungiert. Dabei erweist es sich zudem als vorteilhaft, daß das Verschiebeelement (Dichtring) zwischen der in Steckrichtung des Stecknippels letzten Verriegelungsplatte und den restlichen Verriegelungsplatten eines ganzen Plattenpakets liegt. Auch hier tritt eine sägezahnartige Klemmsituation auf. Im Verein mit der druckabhängigen Verriegelung ergibt sich eine Optimierung des Kupplungssitzes. Über den Innendruck läßt sich eine große Axialkraft erzeugen, demgemäß ein großes Kippmoment auf die Verriegelungsplatten und entsprechend eine große reibkraftschlüssige Verriegelungskraft. Weiter bringt die Erfindung in Vorschlag, daß der Stecknippel zwei axial hintereinanderliegende Zwischenabschnitte mit je zwei Verriegelungsstufen aufweist. Das eröffnet eine vorteilhafte Vor-Rast zwischen Patrizenteil und Matrizenteil, also schon ohne dichtenden Eingriff zwischen Stecknippel und der Ringdichtung. Eine solche Kupplungsweise läßt eine bequeme Handhabung zu, wobei die funktionsgerechte Kupplung erst unter Nutzung der zweiten Stufe herbeigeführt wird. Dabei ist es von Vorteil, daß die den beiden Zwischenabschnitten in Steckrichtung vorgelagerte Mantelfläche für die Verriegelungsplatte im Anschluß an den abgesetzten, mit den Verschiebeelementen (Dichtringen) zusammenwirkenden Einsteckquerschnitt in einen nochmal abgesetzten Endabschnitt ausläuft, der umströmumngsfrei in die Innenhülse ragt. Das führt außer der vorteilhaft nutzbaren Vor-Rast zur Erzielung einer formschlüssigen Haupt-Rast, der Klemmsicherung auch zur Herbeiführung des eigentlichen Dichtschlusses mit dem Nutzen der mediendruckabhängigen Sicherung des erwähnten Klemmsitzes. Weiter wird vorgeschlagen, daß zwischen den Verschiebeelementen (Dichtringen) und der Verriegelungsplatte ein Distanzstück liegt. Das bringt den erforderlichen Überbrückungsbereich zwischen Klemmsitz und klemmfreier Vor-Rast-Stellung der Verriegelungseinrichtung. Endlich wird noch vorgeschlagen, daß das mitkippende Distanzstück die Mantelwand frei übergreifend eine konische, entgegen Steckrichtung des Stecknippels weitende Ringhöhlung aufweist.

Der Gegenstand der Erfindung ist nachstehend anhand zeichnerisch veranschaulichter Ausführungsbeispiele näher erläutert. Es zeigt:

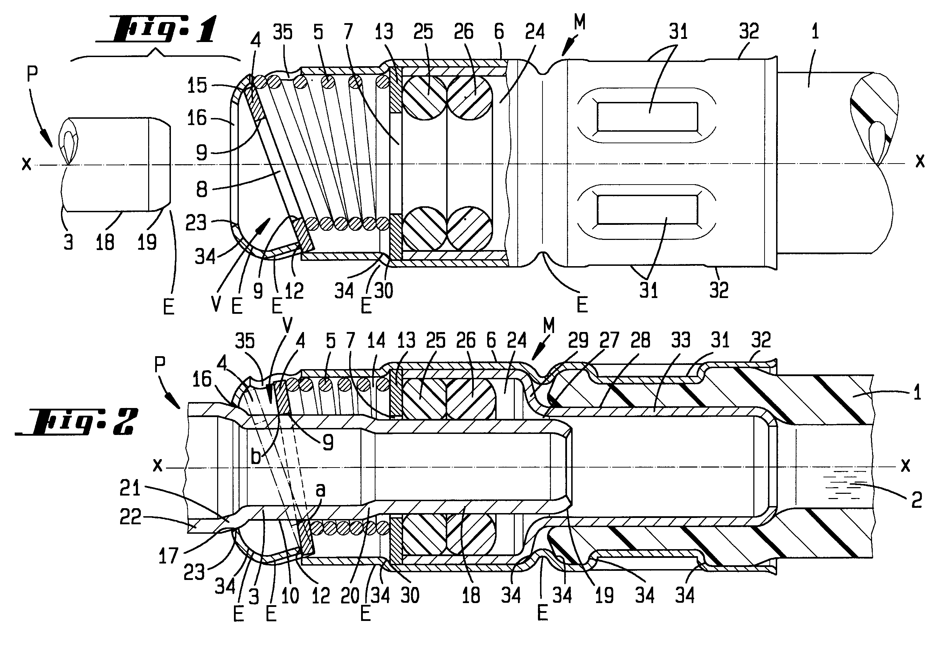

- Figur 1: eine Steckkupplung mit Verriegelungseinrichtung im Längsschnitt gemäß erstem Ausführungsbeispiel, nicht gekuppelt,
- Figur 2: diese Steckkupplung in gleicher Darstellung, jedoch gekuppelt/verriegelt,
- Figur 3: eine Steckkupplung mit Verriegelungseinrichtung in partiellem Längsschnitt gemäß zweitem Ausführungsbeispiel, im Kupplungsvorgang begriffen,
- Figur 4: den Schnitt gemäß Linie IV-IV in Figur 3,

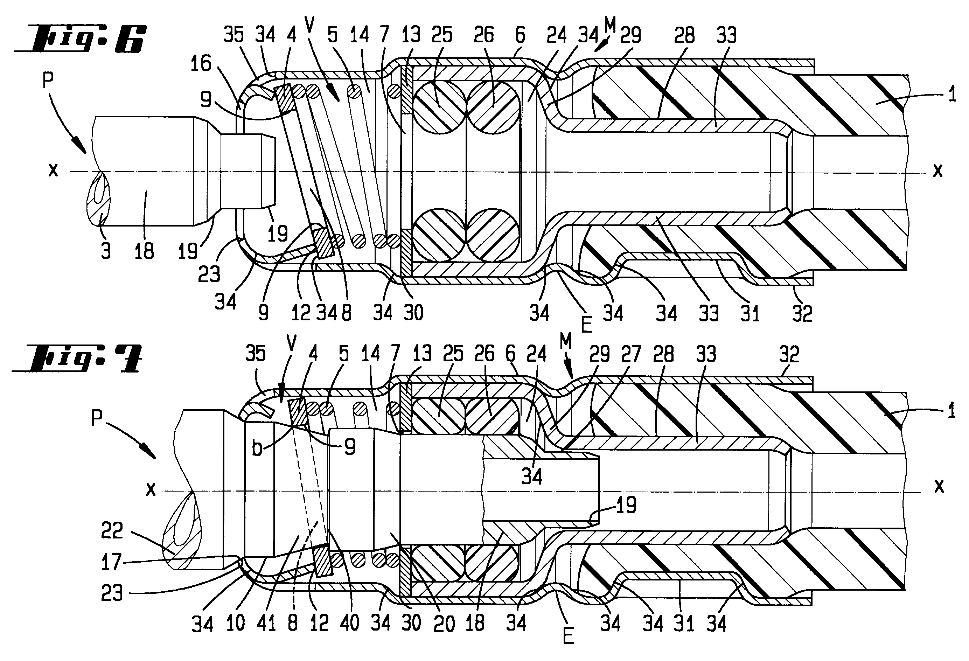

- Figur 5: einen gleichen Schnitt, eine Variante wiedergebend,
- Figur 6: eine Steckkupplung mit Verriegelungseinrichtung im Längsschnitt gemäß drittem Ausführungsbeispiel, nicht gekuppelt,
- Figur 7: die gleiche Darstellung, jedoch gekuppelt,
- Figur 8: ein Schema des Reibschlusses der Verriegelungsplatte mit Verkrallung an einer zylindrischen Mantelfläche des Patrizenteils,
- Figur 9: ein gleiches Schema in Zusammenhang mit einer Verriegelungsstufe,
- Figur 10: die entsprechend naturalistische Darstellung der Figur 9 in Verkrallung/Stufenabstützung,
- Figur 11: dasselbe bei größerem kegelstumpfförmigem Zwischenabschnitt,
- Figur 12: axial beabstandete Verriegelungsstufen bei kugelförmigem Zwischenabschnitt,
- Figur 13: axial beabstandete Verriegelungsstufen bei trapezförmigem Zwischenabschnitt,
- Figur 14: axial beabstandete Verriegelungsstufen mit unterschiedlicher Kegelstumpflänge,
- Figur 15: eine Variante zu Figur 13,
- Figur 16: eine Variante zu Figur 10,
- Figur 17: Verriegelungsplatte und Druckfeder in isolierter Wiedergabe, der Verkrallstellung entsprechend,
- Figur 18: dieselbe, der entkuppelten Grundstellung entsprechend,
- Figur 19: eine Variante zu Figur 17, der Krallstellung entsprechend,
- Figur 20: dieselbe, die entkuppelte Grundstellung wiedergebend,
- Figur 21: eine Steckkupplung mit Verriegelungseinrichtung in partiellem Längsschnitt gemäß viertem Ausführungsbeispiel, ohne Matrizenteil,
- Figur 22: den Schnitt gemäß Linie XXII-XXII in Figur 21,
- Figur 23: diese Steckkupplung in Kupplungsstellung,
- Figur 24: eine Steckkupplung mit Verriegelungseinrichtung im Längsschnitt gemäß fünftem Ausführungsbeispiel, gekuppelt, jedoch noch nicht druckmediumabhängig gesichert,
- Figur 25: dieselbe, nun druckmedienabhängig gesichert,
- Figur 26: eine Steckverschlußkupplung mit Verriegelungseinrichtung in perspektivischer Darstellung gemäß sechstem Ausführungsbeispiel,
- Figur 27: dasselbe im Viertel-Längsschnitt und in Grundstellung,
- Figur 28: eine Steckverschlußkupplung mit Verriegelungseinrichtung im Längsschnitt gemäß siebtem Ausführungsbeispiel, gekuppelt sowie druckmediumabhängig gesichert,
- Figur 29: dieselbe unter Aufhebung der Krallstellung, also ziehbereitem Stecknippel,
- Figur 30: eine Kupplung mit Verriegelungseinrichtung im Längsschnitt gemäß achtem Ausführungsbeispiel, in eine Vor-Rast gebracht, bei noch nicht wirkender Krallstellung und in Ausgangsposition befindlichen Verschiebeelementen und
- Figur 31: dieselbe, in Hauptrast-Stellung überführt, also gekuppelt und druckmedienabhängig gesichert.

Die sowohl als Durchgangskupplung als auch als Verschlußkupplung realisierte Steckkupplung umfaßt ein Patrizenteil P und ein Matrizenteil M. Die der Kupplungszone abgewandten Enden beider Teile gehen in je einen Schlauch 1 oder dergleichen über, welcher das die Steckkupplung durchströmende Medium 2 leitet. Letzteres kann unter Druck stehen.

Sowohl die Steckverschlußkupplung als auch die Steckkupplungen enthalten je eine Verriegelungseinrichtung V. Über die wird der verjüngte, einsteckfähige Abschnitt des Patrizenteils P, der sogenannte Stecknippel 3 in Einsteckposition (Figuren 2, 7, 23, 25 und 27) gehalten. Das geschieht durch Verkrallen und/oder Formschluß am Stecknippel 3. Die Steckverbindung ist dicht.

Das eigentliche Verriegelungselement ist eine Verriegelungsplatte 4. Die steht in Richtung ihrer Grundstellung unter Federbelastung. Es handelt sich um eine Druckfeder 5. Die Druckfeder 5 stützt sich im oder am die sogenannte Steckmuffe bildenden Kupplungsgehäuse 6 einerends ortsfest ab.

Das Kupplungsgehäuse 6 hat eine den Stecknippel 3 aufnehmende Steckhöhlung 7.

Die Verriegelungsplatte 4 besitzt zum Durchtritt des Stecknippels 3 eine Öffnung 8. Deren Öffnungsrandkante 9 bzw. Randkanten 9 sind der fesselungsaktive Abschnitt der zum Zwecke der Fesselung und Freigabe verlagerbaren Verriegelungsplatte 4.

Die Verriegelungsplatte 4 tritt durch eine gelenkzapfenfreie Verlagerung in die Verriegelungsstellung. Der Angriff erfolgt patrizenteilseitig an dessen Mantelfläche 10.

Mit Ausnahme des vierten Ausführungsbeispiels tritt die Verriegelungsplatte 4 unter Kippverlagerung in die Verriegelungsstellung. Der Kippwinkel beträgt ca. 15° zur Normallage. Die Normallage ist eine Lage quer zur Längsmittelachse x-x der Steckkupplung. In besagter Normallage liegt freie Steckbewegleichkeit zwischen der Mantelfläche 10 des Stecknippels 3 und der Öffnung 8 der Verriegelungsplatte 4 vor.

Gemäß viertem Ausführungsbeispiel besteht die gelenkzapfenfreie Verlagerung der dortigen Verriegelungsplatte 4 in einer Schiebeverlagerung derselben in einer Querebene zur besagten Längsmittelachse x-x. Die Verriegelungsplatte 4 führt sich in einem Querschacht 11 des Matrizenteils, also des Kupplungsgehäuses 6.

Während die Kippverlagerung eine beabsichtigte Verkrallung zur Mantelfläche 10 hin bringt, setzt die Schiebeverlagerung auf eine formschlüssige Verriegelung dazu. Der erstgenannte Typ kann aber auch in einer Mischlösung die Verriegelung verwirklichen, also Verkrallen/Formschlußeingriff.

Zurückkommend auf den Typus der gelenkzapfenfreien Kippverlagerung, so liegt diese Verriegelungsplatte 4 im Kupplungsgehäuse 6 abgestützt an einem Anschlag 12. Der ist von einer durch Freischnitt erzielten Randkante oder Schulter einer Wandungseinstülpung des Kupplungsgehäuses 6 gebildet. Er bietet dem Fuß der Verriegelungsplatte das die aus Figur 2 ersichtliche spitzwinklige Stellung mitbestimmende Widerlager. Der Anschlag 12 ist von solcher Höhe, daß die praktisch schwimmend gelagerte Verriegelungsplatte überlagernde Bewegungen auch in der in ausgezogener Linienart wiedergegebenen verkrallenden Stellung ausüben kann, sich also optimal klemmaktiv auf die Mantelfläche 10 einstellen kann. Zur Klemmwirkung kommen dabei eine untere sichelförmige Schneide a und eine obere sichelförmige Schneide b, erstere der Druckfeder 5 zugewandt, letztere der Druckfeder abgewandt. Zug am Stecknippel 3 verstärkt dabei nur noch die erstrebten Klemmkräfte.

Wie beispielsweise Figur 2 entnehmbar, durchsetzt der Stecknippel 3 die dort als Schraubengang-Druckfeder realisierte Druckfeder 5 berührungsfrei. Es liegt zudem ein exzentrischer Durchgriff vor. Der Versatz des zylindrischen Federkörpers zum zumindest innen zylindrischen Wandungsverlauf des Kupplungsgehäuses 6 liegt in der dem Anschlag 12 abgewandten Querrichtung. Nach dort hin divergiert auch die zwischen der geneigt verlaufenden Verriegelungsplatte 4 und einer Trennwand 13 des Kupplungsgehäuses 6 gebildete Federkammer 14. Die Federkammer erstreckt sich senkrecht zur Längsmittelachse x-x und formt die zentral liegende Steckhöhlung 7. Besagter Versatz des Federkörpers hat den Vorteil, daß die Federbelastung gleichsinnig an der Verriegelungsplatte 4 wirkt, also keine Federkräfte jenseits des Anschlages 12 als Konterbelastung aufkommen können. Die Spreizkraft der Feder selbst begünstigt die Einnahme der dargestellten exzentrischen Lage.

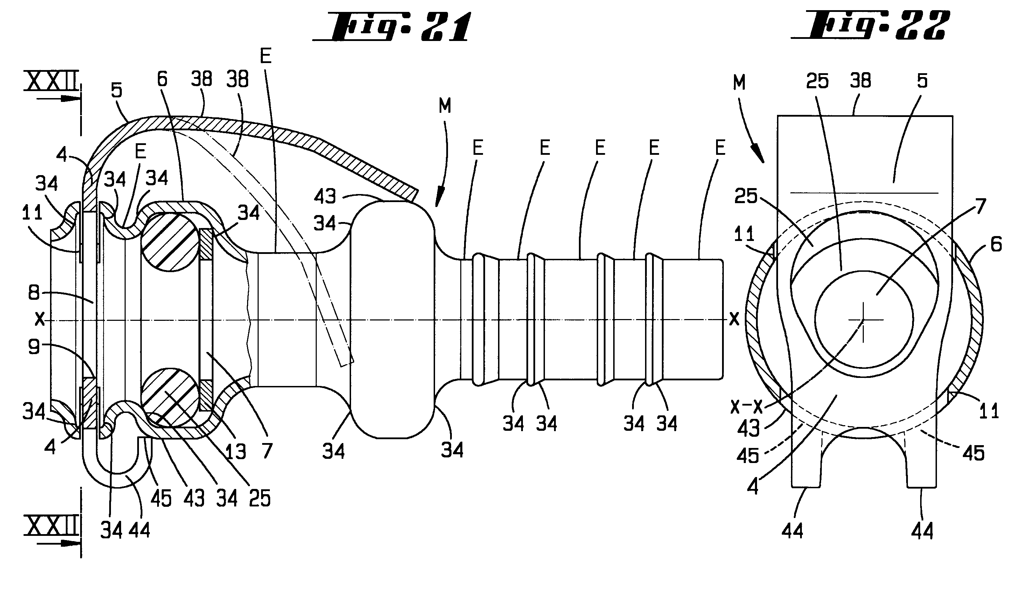

Der Achsenversatz ergibt sich z.B. aus Figur 17. Die Längsmittelachse der Druckfeder heißt x'-x'.

Wie aus Figur 2 hervorgeht, fungiert die ringförmig gestaltete Trennwand 13 zugleich als Widerlager für die dortige endständige Windung der Druckfeder 5.

Das freie, obere Ende der kippverlagerbaren Verriegelungsplatte 6 findet seine schließliche Abstützung, und zwar bei gezogenem Stecknippel 3, an einem Anschlag 15 des Kupplungsgehäuses 6. Der ist an der Einstecköffnung 16 des Matrizenteils M realisiert, und zwar durch eine einwärts gehende Verformung des Rohrendes des aus einem Rohr gebildeten Matrizenteils. Die so das Eingerichte der Verriegelungseinrichtung V gegen Heraustritt sichernde Schulter der Einstecköffnung 16 übernimmt noch eine weitergehende Funktion, und zwar die einer Patrizenteil-Steckzentrierung. Die passende, konisch gestaltete, rotationssymmetrische Gegenfläche des Stecknippels 3 trägt das Bezugszeichen 17.

Der Stecknippel 3 weist eine Stufung auf. Ausgehend von dem die Zentrierungs-Gegenfläche 17 formenden Querschnitt schließt ein deutlich abgesetzter Querschnitt an, welcher die erwähnte zylindrische Mantelfläche 10, also den Verkrallungsbereich bildet. Der geht als dortiger Mittelabschnitt des Patrizenteils P stufenförmig in einen deutlich verjüngten Einsteckquerschnitt 18 des Stecknippels 3 über. Der so im Außendurchmesser weiter verringerte Einsteckquerschnitt 18 kann durch die Öffnung 8 bei der Kupplungsfindung frei die Verriegelungsplatte 4 passieren, deren Öffnung 8 fluchtend zum besagten Einsteckquerschnitt 18 liegt. Allenfalls wird die sich bei 15 abstützende Verriegelungsplatte 4 sich dort leicht abheben und über die Oberseite des Stecknippels gleiten. Zum erleichterten Einfühlen des Stecknippels 3 ist dessen freies Ende bei 19 gefast. Bei Verwendung eines Rohres zur Bildung des Nippels kann diese Fasung durch einwärts gerichtete Einziehung, wie dargestellt, verwirklicht werden. Erst unter Überwindung der zumindest peripher vorgesehenen, konischen Übergangsstufe 20 kommt es dazu, daß die Öffnungsrandkanten 9 sich unter teilweiser Verlagerung bzw. Abhebung der Verriegelungsplatte 4 in Erstreckungsrichtung derselben am Anschlag 12 auf der Mantelfläche des Patrizenteils verkrallen, wobei die Stecktiefe begrenzt wird durch die Übergangsstufe 21 zum Anschlußabschnitt 22 des Patrizenteils P hin.

Die konische Randkante 23 verjüngt sich entsprechend der trichterförmigen Gestalt der Gegenfläche 17 zum Inneren des Kupplungsgehäuses 6 hin.

Die Trennwand 13 teilt die Federkammer 14 von einer dieser koaxial nachgeschalteten Dichtungskammer 24 des Matrizenteils M ab. Letztere nimmt zwei hintereinander angeordnete Dichtungsringe 25, 26 als Radialdichtung auf. Die Dichtungsringe werden druckmedienabhängig entgegen der Einsteckrichtung des Stecknippels 3 verlagert, dies zufolge Belassung eines Spalts 27 zum Endbereich des Patrizenteils P hin. Es handelt sich um einen Ringspalt zwischen der Mantelwand 10 und der korrespondierenden Innenwandung einer abgesetzten Innenhülse 28 des Patrizenteils. Die Innenhülse 28 ist aus einem Rohr gestaltet. Die querschnittsverändernde Übergangsstufe bildet die Rückwand 29 der Dichtungskammer 24, d.h. eine radial gerichtete Schulter.

Der die Dichtungskammer 24 umschreibende, querschnittsgrößere Abschnitt der Innenhülse 28 tritt mit seinem Stirnende lagesichernd gegen die Breitfläche der Trennwand 13, die ihrerseits ihre Abstützung an einer Ringkante 30 des aus einem Rohr gebildeten Kupplungsgehäuses 6 findet.

Der querschnittskleinere, d.h. im Durchmesser kleinere Abschnitt der Innenhülse 28 reicht bis hin zu einer umlaufenden Schlauchquetschstelle 31. Bestandteil derselben ist eine aus dem gehäusebildenden Rohr geschaffene Quetschhülse 32, die von besagtem Abschnitt überlappt ist und eine Art Stützkern 33 formt. Wie den Zeichnungen entnehmbar, ist über Einziehungen E des im Ausgang ein Rohr darstellenden Grundkörpers die axial definierte Abstützung der Eingerichteteile bewirkt, dies unter Bildung diverser Schultern 34. Diese Bezugsziffer gilt für jeden die Grundform des Rohres verlassenden Querversatz, also im dargestellten Ausführungsbeispiel für die Schlauchquetschstelle 31, die Ringkante 30, den Anschlag 12, den Anschlag 15 und im übertragenen Sinn auch für die Rückwand 29 der Innenhülse 28.

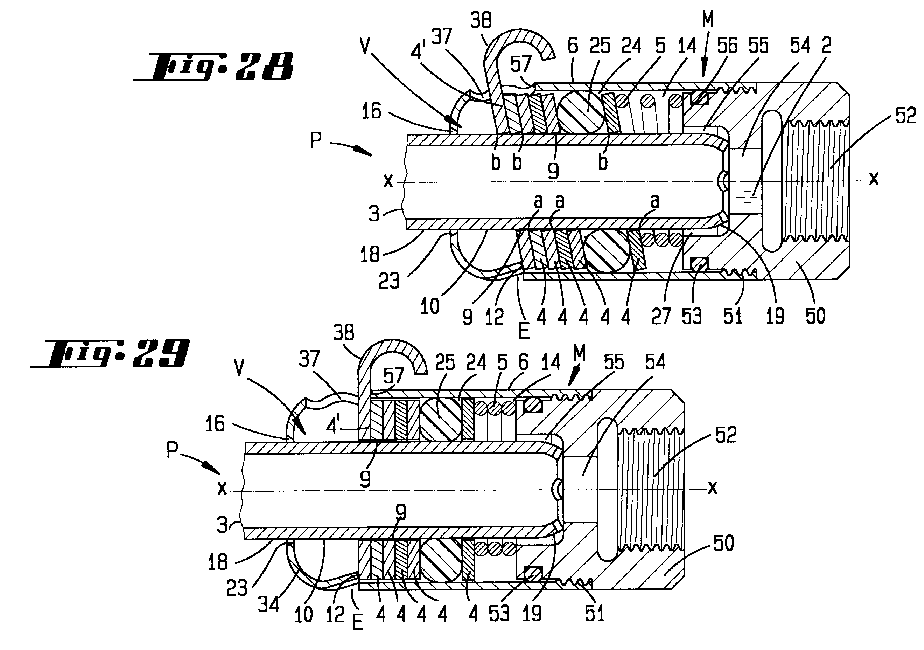

Unter Aufhebung der Verriegelungsstellung wird die Verriegelungsplatte 4 entgegen Federbelastung etwa bis in die erwähnte Normallage gekippt. Die entsprechende Zugänglichkeit der Verriegelungsplatte 4 ergibt sich durch eine derselben benachbart liegende Werkzeug-Einstecköffnung 35 des Matrizenteils. Die diesbezügliche Öffnung geht beispielsweise aus Figur 2 hervor und liegt dem Anschlag 12 diametral abgewandt. Das zugehörige Werkzeug ist in strichpunktierter Linienart in Figur 25 veranschaulicht und dort mit 36 bezeichnet. Die Einstecköffnung ist in figur 2 von solcher Größe, daß sie die optische Kontrolle der korrekten Verriegelungsstellung erlaubt. Beim vierten Ausführungsbeispiel ist eine Ausgestaltung gewählt, die die Einstecköffnung 35 weitestgehend der Sicht entzieht, also beispielsweie als Kindersicherung dienen kann.

Ist dies nicht erstrebt, so wird alternativ so vorgegangen, daß der Verriegelungsplatte 4 eine durch eine Öffnung 37 des Matrizenteils M nach außen reichende Betätigungshandhabe 38 zugeordnet wird. Es handelt sich um einen radial nach auswärts ragenden, durch die Öffnung 37 im wesentlichen anschlagbegrenzt kippgeführten Finger. Der ist spazierstockgriffartig eingerollt. Bevorzugt ist die Betätigungshandhabe 38 Teil einer der Verriegelungsplatte 4 benachbarten, in Entkupplungsrichtung liegenden Platte 4'. Um der eine über die Funktion der Freigabe hinausgehende Funktion zu geben, ist die Betätigungshandhaben-Platte 4' ebenfalls als Verriegelungsplatte ausgebildet.

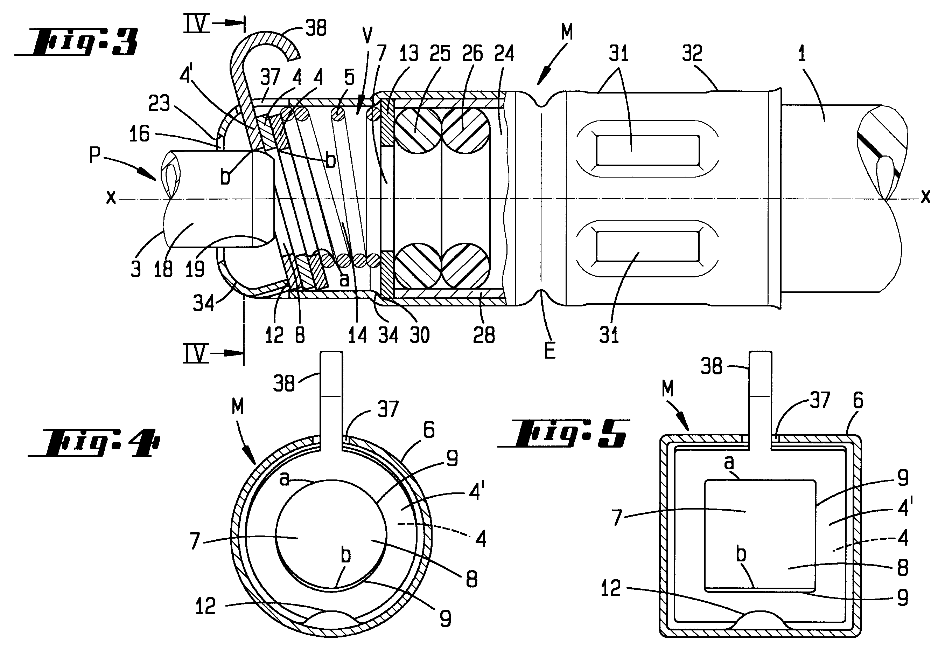

Eine derartige Anwendung ergibt sich aus dem zweiten Ausführungsbeispiel (Figur 3). Dort sind über zwei hinausgehende Verriegelungsplatten 4 aneinanderliegend derart hintereinanderliegend aufgereiht, daß durch entsprechend gleich gestaltete Öffnungen 8 eine sägezahnartige Verkrallungsstruktur entsteht, eben weil mehrere Öffnungsrandkanten 9 bzw. Schneiden a, b klemmfassend an der Mantelfläche 10 des Stecknippels 3 wirken können.

Dem gleichen Zeichnungsblatt ist in Figur 4 die erweiterte Form der Verriegelungsplatte 4' im Umriß entnehmbar. Diese braucht natürlich nicht die kreisrunde Ringgestalt aufzuweisen, sondern kann ebensogut auch eine unrunde Gestalt der Öffnungsrandkanten 9 und/oder der Umrißform der Verriegelungsplatte aufweisen. Sie ist quadratisch. Formangepaßt nimmt das sie umgebende Kupplungsgehäuse 6 einen ebenfalls quadratischen Querschnitt ein. Unter Voraussetzung der entsprechenden Stabilität kann auch ein U- oder C-förmiger Plattenzuschnitt greifen, wobei die Innenseiten der U/C-Schenkel dann die Öffnungsrandkanten 9 bzw. Schneiden a, b stellen.

Bezüglich der Druckfeder 5 bleibt noch auf Abwandlungen hinzuweisen, wie sie sich aus den Figuren 17 bis 20 ergeben. Im Interesse der möglichst neigungskonformen Vor-Ausrichtung der der Verriegelungsplatte 4 zugewandten Endwindung der Druckfeder 5 ist dort das Ende der Windung so gelegt bzw. gekappt, daß ein Ganganstieg am oberen Ende der Verriegelungsplatte 4 bzw. zusätzlichen Platte 4' gangüberragend angreift. Es liegt also ein in Rückstell-Belastungsrichtung vortretender Abschnitt vor. Die Endwindung ist dort nicht voll aufgelegt, im Gegensatz zur der Trennwand 13 zugewandten Endwindung, die geschliffen oder ungeschliffen dort in der Normallage aufliegt.

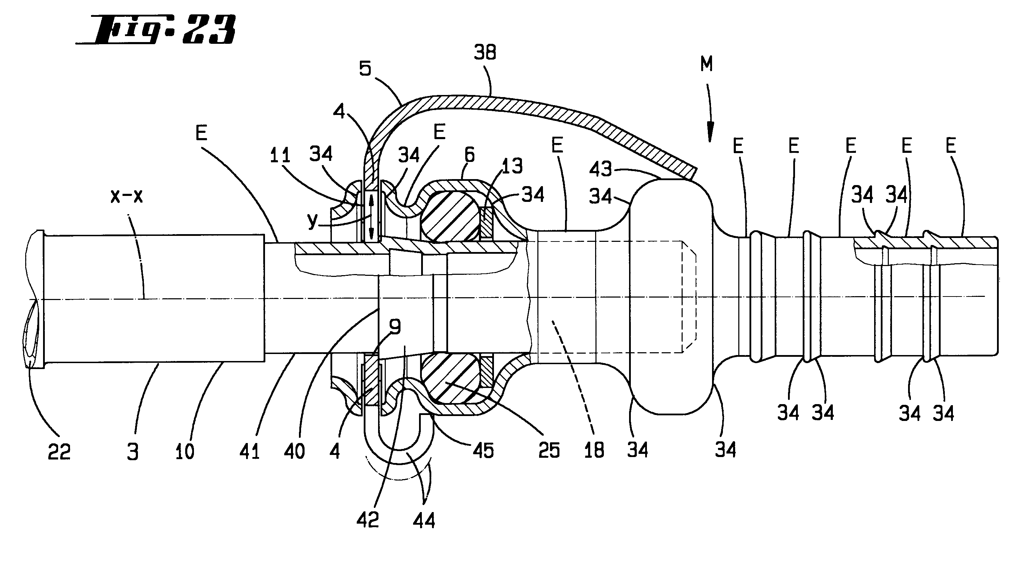

Die entsprechend vergleichende Darstellung liegt auch den Figuren 19 und 20 zugrunde, wobei in baulicher Hinsicht der Unterschied besteht, daß dort im Interesse einer möglichst geringen Baulänge einfach ein Teilabschnitt einer Schraubengangfeder verwendet wird, wobei ein Schenkel in der Normallage an 13 aufliegt und der andere, demgegenüber V-förmig abgespreizte wiederum in Vorstandslage bevorzugt das obere Ende der Verriegelungsplatte 4 bzw. 4' beaufschlagt.

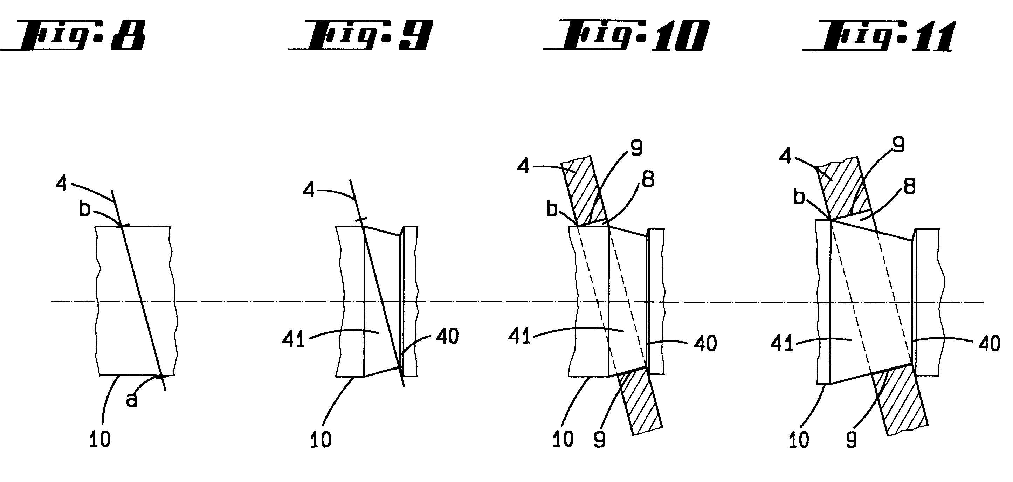

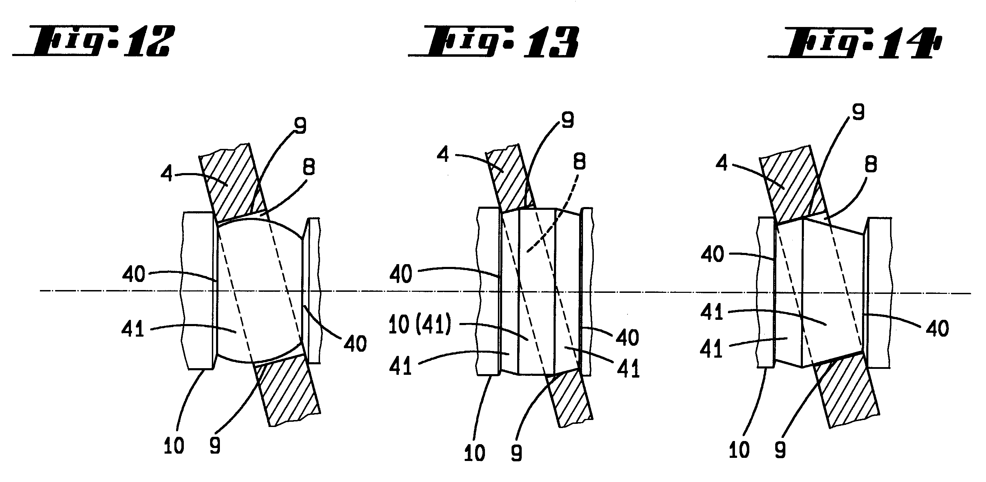

Neben der erläuterten verkrallenden Verriegelung kann zusätzlich oder alternativ der Mittelabschnitt auch noch im Sinn einer formschlüssigen Verriegelung ausgebildet sein, indem dort Verriegelungsstufen 40 berücksichtigt sind (vergl. z.B. Figur 7). Unter Beibehaltung eines sonst prinzipiell gleichen Aufbaues trägt der Mittelabschnitt des Stecknippels 3 eine solche Formgebung, die unter Verkippen die entsprechend korrespondierende Randauflage der Verriegelungsplatte 4 erlaubt, und zwar entweder einseitig oder beidseitig. Bei einer einseitigen verriegelnden Auflage auf einer Verriegelungsstufe 40 genügt es, die Mantelwand des Stecknippels 3 beispielsweise so einzustechen oder einzuziehen, daß ein kegelstumpfförmiger, also eine Hinterschneidung schaffender Zwischenabschnitt 41 entsteht. Der kann zweckmäßig so sein, daß sich in der Kippstellung der Verriegelungsplatte 4 die untere Öffnungsrandkante 9 der Öffnung 8, also die Wandung der Öffnung, satt gegen die Kegelmantelfläche legt und, wie gesagt, der der Federkammer 14 zugewandte Rand auf der Stufe 40 aufliegt. Je nach Länge des kegelstumpfförmigen Zwischenabschnitts 41 tritt dann auf seiner Kegelfläche oben die beschriebene Verkrallungswirkung durch die dortige sichelförmige Schneide b auf. Wird für den trapezförmigen Zwischenabschnitt 41 eine kürzere axiale Länge zugrundegelegt (vergl. beispielsweise Figur 10), so findet die erwähnte Verkrallung wiederum am zylindrischen Teil der Mantelfläche 10 statt.

Andere Ausführungen im Bereich der Figuren 8 bis 16 zeigen nützliche, in bestimmten Verwendungsfällen bevorzugte Varianten, etwa in der Weise, daß gemäß Figur 13 eine gegenläufige Ausbildung solcher kegelstumpfförmiger Zwischenabschnitte 41 zugrundeliegt, und zwar mit ihren größeren Basisflächen gegeneinandergerichtet, also Rücken an Rücken.

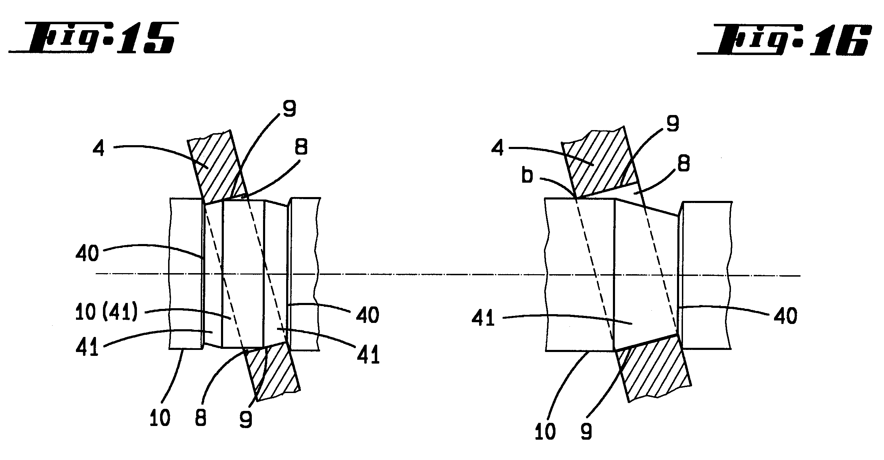

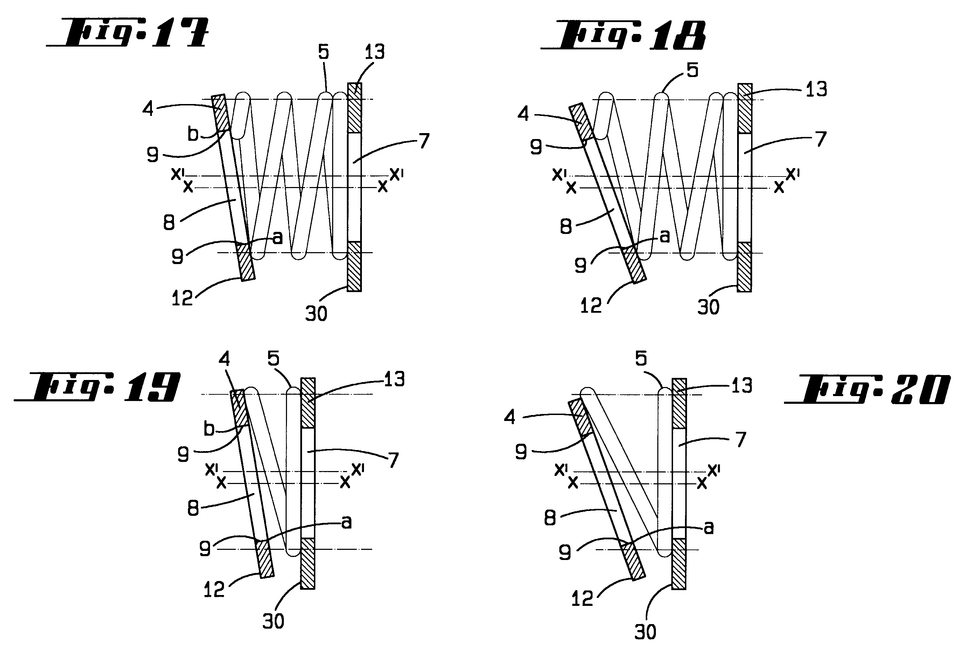

Wählt man für solche kegelstumpfförmigen Zwischenabschnitte 41 dagegen eine axiale Beabstandung ihrer Basisflächen, so erhält man das beispielsweise in Figur 13 veranschaulichte rotationssymmetrische Profil am Stecknippel 3, so daß dort wie in Figur 14 zwei axial beabstandete Verriegelungsstufen 40 erzeugt werden, nun jedoch durch einen trapezförmig profilierten Zwischenabschnitt 41. Eine besonders kippbegünstigende, dabei großflächige Anschmiegbarkeit bzw. Verriegelungsstufen-Auflagebreite wird bei einer Ausgestaltung erreicht, die in Figur 12 wiedergegeben ist. Dort liegt ein kugelförmiger Zwischenabschnitt 41 zugrunde. Der Kugeldurchmesser entspricht etwa dem Durchmesser des zylindrischen Abschnitts der Mantelfläche 10. Der lichte Durchmesser der Öffnung 8 ist dagegen etwas größer gewählt.

Bei allen unterschiedliche Dicke aufweisenden Verriegelungsplatten 4 liegt die die Öffnung 8 bildende Bohrung oder Ausnehmung stets senkrecht zu Erstreckungsebene der Platten.

Bezugnehmend auf das vierte Ausführungsbeispiel, verkörpernd die gelenkzapfenfreie Schiebeverlagerung der Verriegelungsplatte 4, ist sogar eine fallenartig wirkende Verriegelung der dortigen Verriegelungseinrichtung V gegeben. Erreicht ist das einfach dadurch, daß hinter der dortigen umlaufenden Verriegelungsstufe 40 ein nutenförmiger Zwischenabschnitt 41 verläuft. Der Nutengrund ist zylindrisch und geht links wieder in die ebenfalls zylindrische Mantelfläche 10 größeren Außendurchmessers über. Die Stufe 40 wiederum geht über einen Aussteuerungsabschnitt 42 in den zylindrischen, durchmesserreduzierten Einsteckquerschnitt 18 des Stecknippels 3 über.

Diese Steckkupplung arbeitet mit einer externen Druckfeder 5. Sie ist integraler Bestandteil der im Querschacht 11 geführten Verriegelungsplatte 4.

Dazu ragt die Verriegelungsplatte 4 beiderends aus dem Querschacht 11 heraus. Ihr oberes Ende geht in eine Betätigungshandhabe 38 über. Es ist dazu im wesentlichen in Richtung der Längsmittelachse x-x der Steckkupplung verlaufend abgewinkelt. Das freie Ende stützt sich auf einer Mantelfläche 43 des Kupplungsgehäuses 6 des Matrizenteils M federnd ab.

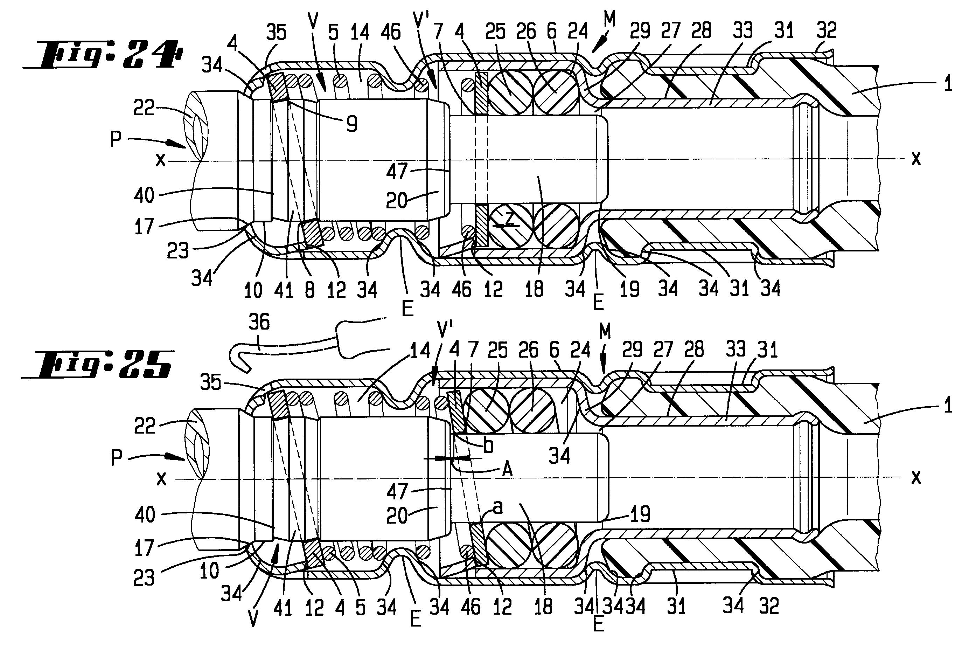

Der Kraftspeicher wird an diesem einem Blattfederkörper vergleichbaren Element durch Vorfaltung seines die Betätigungshandhabe 38 bildenden Schenkels aufgebracht. Die Vorfaltstellung geht aus Figur 21 hervor (vergl. strichpunktierte Linienart) und hat ein spitzwinkligeres V-Profil als in montiertem Zustand.

Das andere, untere Ende durchsetzt ebenfalls die dortige Öffnung des Querschachtes 11. Es ist zu einer Fesselungsnase 44 umgebogen, d.h. in der gleichen Richtung wie das obere Ende, jedoch wieder quer auf das Gehäuse 6 hin zurückgeführt, wo es sich an einem dortigen Mantelwandabschnitt über die Stirnkante 45 abstützt.

In Grundstellung tritt die untere Öffnungsrandkante 9 satt gegen den Grund des nutförmigen Zwischenabschnitts 41, der öffnungsnahe Rand dort jedoch gegen die erwähnte Verriegelungsstufe 40 des kegelstumpfförmigen Steuerungsabschnitts 42 des Patrizenteils. Der kegelstumpfförmige Steuerungsabschnitt bildet die Auflaufschräge dieser fallenartig wirkenden Verriegelungseinrichtung V.

Was die blattfederartige Verriegelungsplatte 4 betrifft, so sind weitere Einzelheiten Figur 22 entnehmbar. Die Öffnung 8 zeigt eine schlüssellochartige Kontur. Das ist so, daß die Öffnung 8 der Verriegelungsplatte 4 nur über einen unteren Teilumfang der Mantelflächenkrümmung des Stecknippels 3 greift. Der restliche, obere Abschnitt der Öffnung 8 weitet sich dagegen deutlich, sowohl in der Breite als auch in der Höhe. Im Grunde sind zwei einander schneidende Kreise zugrundegelegt, so daß oben ein vertikaler Abstand y zur Mantelfläche 10 besteht. Dieser Abstand liegt in Richtung der Federbelastung der Verriegelungsplatte 4. Besagter Abstand y ist deutlich größer als die Höhe der Verriegelungsstufe 40 beträgt.

Wie ersichtlich, zentriert sich der verjüngte Endabschnitt, sprich Einsteckquerschnitt 18, berührend in der Steckhöhlung 7 des Matrizenteils.

Bei diesem wie bei allen formschlüssigen Verriegelungen ist darauf geachtet, daß die Verriegelungsstufe 40 der Kippstellung der Verriegelungsplatte 4 im wesentlichen entsprechend geneigt verläuft. Optimal ist eine konturentsprechende Einlagerung der verriegelnden Randkanten.

Die beschriebene fallenartige Verriegelung kann auch an einer Doppelplatte als Verriegelungsplatte 4 realisiert sein, indem die zwei ebenengleich geführten, federnd gegeneinander belasteten Backen die Öffnungsrandkanten 9 bilden. Die Backen sind freigeschnittene, gegeneinander gewinkelte Lappen eines Rahmenstückes, dessen Rahmenlängsschenkel die gehäuseaußenseitig verlaufende Betätigungshandhabe 38 als Wippe bilden und zugleich die Druckfeder darstellen (nicht gezeichnet).

Auch beim vierten Ausführungsbeispiel ist zur Bildung des Matrizenteils und des Patrizenteils M bzw. P auf Rohr als Ausgangsmaterial zurückgegriffen, dies unter Wendung der angedeuteten Einziehungen E etc.. Ansonsten sind die Bezugsziffern sinngemäß ohne textliche Wiederholungen angewandt.

Beim dritten Ausführungsbeispiel ist dagegen der Eingriff des Einsteckquerschnitts 18 in die dort vorgesehene Innenhülse 28 unter Belassung eines Spalts 27 bevorzugt.

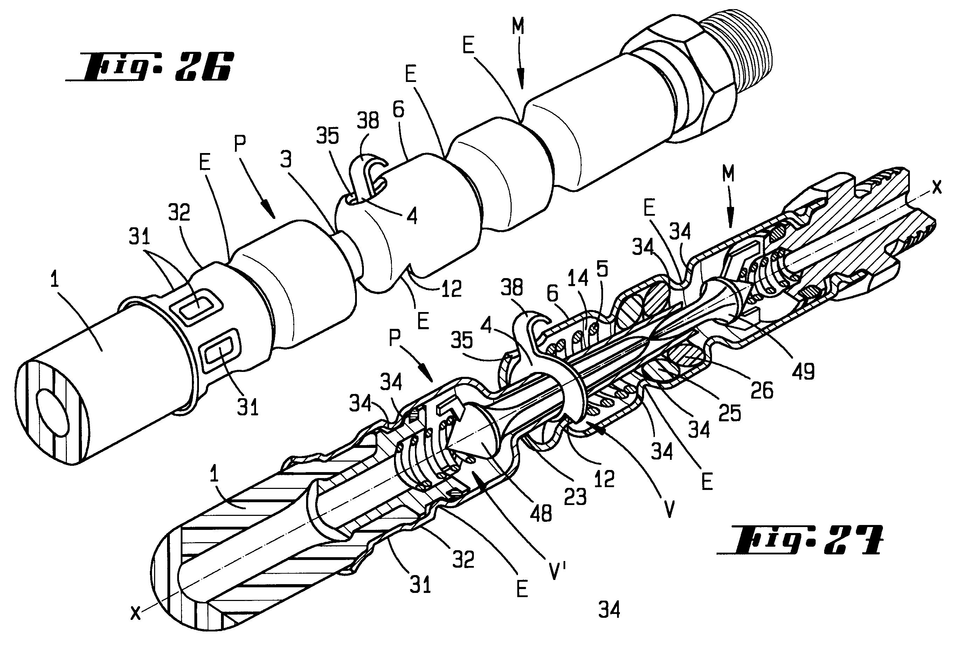

Die Steckkupplung gemäß dem fünften Ausführungsbeispiel (Figuren 24 und 25) stellt insofern eine Weiterbildung dar, als dort die Kippverlagerung einer zweiten Verriegelungsplatte 4 aus dem Druck des die Kupplung durchströmenden Mediums 2 resultiert. Zur Realisierung dieser Verriegelungseinrichtung V' ist der querschnittsreduzierte, zylindrische Einsteckquerschnitt 18 des Stecknippels 3 herangezogen. Dieser auffallend durchmesserkleinere Abschnitt des Stecknippels durchsetzt völlig frei die vorgeschaltete Verriegelungseinrichtung V, die hier als Formschlußtyp gestaltet ist. Zu diesem Zweck entfällt hier die anschlagbildende Trennwand 13 zur Dichtungskammer 24 hin. Die Abstützung der Druckfeder 5 der vorgeschalteten Verriegelungseinrichtung V übernimmt hier die schon erläuterte Einziehung E, und zwar die linksseitige Schulter 34 derselben.

Die dagegen auf die Verkrallwirkung abgestellte kippverlagerbare Verriegelungsplatte 4 kommt in der Dichtungskammer 24 unter. Sie stützt sich an der zum vergleichbaren Typus erläuterten Stufe 12 ab und nimmt in der aus Figur 24 ersichtlichen Grundstellung die sogenannte Normallage ein, also senkrecht zur Längsmittelachse x-x verlaufend. Einsteckseitig dieser Steckkupplung befindet sich vor der zweiten Verriegelungsplatte 4 eine Druckfeder 46. Auch hier handelt es sich um eine Schraubengang-Druckfeder. Ihre der Verriegelungsplatte 4 abgewandte endständige Windung findet ein Widerlager an der Einziehung E, dort an der rechten Schulter 34 derselben.

Die Kraft der Druckfeder 46 ist geringer die Druckkraft des geführten Mediums 2. In druckmedienentlastetem Zustand ist die Druckfeder 46 jedoch in der Lage, die aus Figur 24 ersichtliche Normallage herbeizuführen.

Der erwähnte Anschlag 12 wird nun von einem freigeschnittenen Wandungslappen der Innenhülse 28 des Matrizenteils M gebildet. Auf der dieser Widerlagerstelle abgewandten Seite befindet sich ein auf Mediendruck ansprechendes, axial verlagerbares Verschiebeelement in Form der oben erwähnten Dichtungsringe 25 und 26. Während die gegeneinandergedrückten Dichtungsringe unten axial unverschieblich, allenfalls komprimiert am Anschlag 12 via Verriegelungsplatte 4 gestoppt bleiben, gehen die von O-Ringen gebildeten Dichtungsringe 25, 26 im ganzen in die aus Figur 25 ersichtliche Kipplage über. Der entsprechende Medienangriff ist dort möglich zufolge Belassung des Spaltes 27 zwischen dem Inneren der Innenhülse 28 und dem zentral liegenden Einsteckquerschnitt 18. Die durch Einziehung erzeugte Rückwand 29 fungiert dagegen als Anschlag für die paarig angeordneten Verschiebeelemente in der Grundstellung (Figur 24).

Kupplungen solcher Art lassen sich mit Vorteil beispielsweise an Klimaanlagen verwenden. Im Moment des Kuppelns ist die Klimaanlage noch drucklos. Die Druckfedern 5 und 46 sind entspannt. Die zusätzliche Verriegelungsplatte 4 befindet sich infolge der Kraftwirkung der Druckfeder 46 in Normallage. Sie stützt sich rechts an den Verschiebeelementen, die ihrerseits bei 29 ihren Halt finden, ab. Insoweit kann auch hinsichtlich der Dichtungsringe 25, 26 von einer Normallage zur Längsmittelachse x-x geredet werden. In diesem drucklosen Zustand wird nun der Stecknippel 3 eingeführt. Er verrastet in der Verriegelungseinrichtung V. Bei diesem Vorgang ist der Einsteckquerschnitt 18 in die beiden Dichtungsringe 25, 26 eingetaucht. Der Dichtungskontakt ist hergestellt. Mit dem nunmehrigen Einfüllen des Kältemittels (Medium 2) gerät das Innere der Steckkupplung unter Druck. Es baut sich in der Dichtungskammer 24 eine Kraft in Richtung des Pfeiles z auf. Entgegen der Federkraft der Feder 46 werden die Dichtungsringe 25, 26 (beispielsweise ein Dichtring und ein Ozonring) infolge des Innendrucks auf das freie Ende des Stecknippels 3 nach links bewegt (beispielsweise erst dann in die Normallage), bis die Verriegelungsplatte 4 der zusätzlichen Verriegelungseinrichtung V' mit dem Anschlag 12 kontaktiert. Sodann erfolgt ab einem bestimmten Innendruck, und zwar unabhängig von der Kraft der Feder 46, ein Schrägstellen der Verriegelungsplatte 4, die schließlich im Bereich des Einsteckquerschnitts 18 des Stecknippels 3 ein formschlüssiges Bewegungsende erfährt. Infolge des Reibwertes zwischen Verriegelungsplatte 4 und dem Einsteckquerschnitt 18 stellt sich in der oben beschriebenen Weise aufgrund einer hohen Reibkraft zwischen 4 und 18 eine Verkrallung ein. Diese sperrt den Entkupplungsvorgang mindestens bis zu einem bestimmten Mindest-Restdruck, dessen Größe beispielsweise abhängig ist von der Federspannkraft der Druckfeder 46 und der Reibkraft zwischen den Dichtungsringen 25 und 26 und der Mantelfläche des Einsteckquerschnitts 18. Um die Kupplung lösen zu können, ist das System zuvor druckzuentlasten. Zum Zweck des Entkuppelns ist sodann mit dem Werkzeug 36 die Verriegelungsplatte 4 der Verriegelungseinrichtung V in die Normallage zu stellen. Sie kommt dann außer Eingriff mit den dortigen Verriegelungsstufen 40. In dieser Normallage entgegen der Federkraft in Richtung z läßt sich hier zufolge entsprechenden Freigangs das Kupplungsgehäuse 6 weiter nach links zum Stecknippel 3 hin bewegen und damit weiter auf den Stecknippel 3 aufschieben. Bei diesem weiteren Aufschieben kontaktiert eine Stoßstufe 47 am Patrizenteil P die Verriegelungsplatte 4.

Die Stoßstufe 47 fungiert als Mitnehmer. Sie stellt die Verriegelungsplatte 4 schließlich in ihre Normallage. Bei ausbleibendem Innendruck bewegen sich auch die beiden Dichtungsringe 25, 26 in eine derartige Normallage.

Das Ausbleiben jedweder Dichtringkraft infolge fehlenden Innendrucks läßt die Dichtungsringe 25, 26 in dieser Grenzlage verharren. Ansonsten stellt die Druckfeder 46 die erforderliche Normallage her. In dieser Normallage ist die Verriegelungseinrichtung V' unwirksam, d.h. neutral.

Der Stecknippel 3 läßt sich nach Freigabe der vorgeschalteten Verriegelungseinrichtung V ziehen.

Falls der Stecknippel 3 aus relativ weichem Werkstoff besteht, kann es vorteilhaft sein, einen Restweg zwischen der letzten mündungsseitigen Klemmstelle b und der Übergangsstufe 20 respektive der Stoßstufe 47 zu belassen. Der axiale Abstand ist in Figur 25 mit A bezeichnet. Dies bedeutet, daß die Verriegelungseinrichtung mit der zusätzlichen Verriegelungsplatte 4 erst dann effektiv wirksam wird, wenn versucht wird, die Steckkupplung zu entkuppeln, während noch Restdruck besteht.

Da die ausführliche Funktionsbeschreibung im Prinzip auch auf die anderen Lösungen lesbar ist, soll auf eine diesbezügliche Darstellung verzichtet werden.

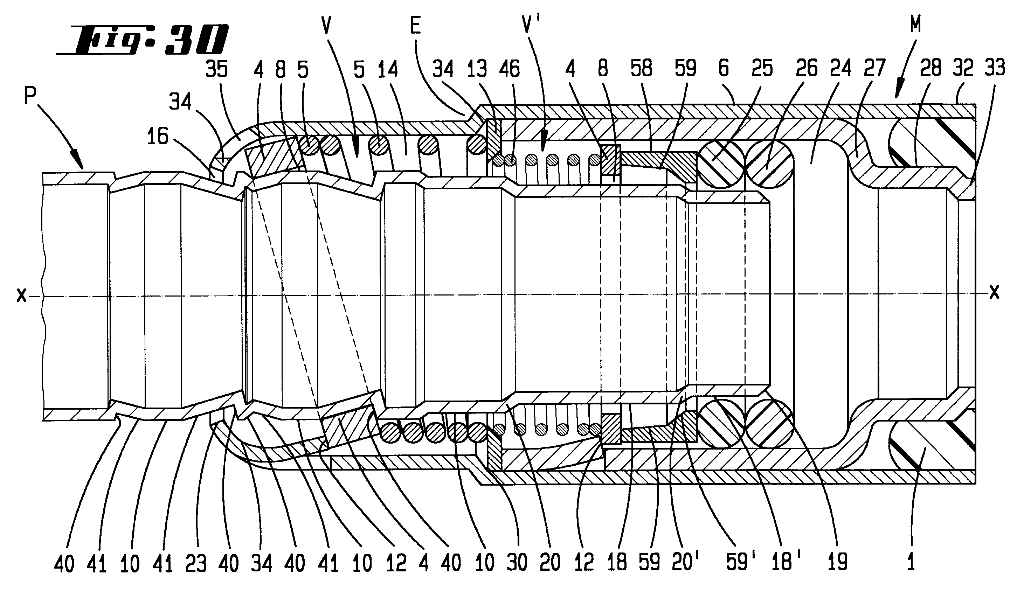

In den Figuren 26 und 27 ist die erfindungsgemäße Verriegelungseinrichtung V auch noch an einer Steckverschlußkupplung gezeigt. Die Bezugsziffern sind sinngemäß angewandt. Eine solche Steckverschlußkupplung weist unter Federbelastung stehende Verschlußorgane 48, 49 auf. Diese stehen in Richtung ihrer Ventilsitzflächen unter Federbelastung. Das Verschlußorgan 48 befindet sich im Strömungsweg des Patrizenteils P, das mit 49 bezeichnete im Matrizenteil M. Sobald die Steckverbindung herbeigeführt ist, heben die Verschlußorgane 48 von ihren korrespondierenden Ventilsitzflächen ab, indem ihre Schäfte gegeneinandertreten, und geben den Weg für das Medium 2 frei. Die Steckstellung wird durch die Verriegelungsplatte 4 unter Ausübung der erläuterten Krallwirkung gesichert. Die willensbetonte Verlagerung der Verriegelungsplatte 4 unter Benutzung der Betätigungshandhabe 38 erlaubt die Freigabe.

Die Verriegelungswirkung bzw. Klemmwirkung tritt stets in einem freien Kippbereich der Verriegelungsplatte 4 auf, bevor also diese oder die Platte 4' federbelastet gegen den schließlichen Anschlag 15 schwenkt.

Was nun die Ausgestaltung gemäß dem siebten Ausführungsbeispiel betrifft, so handelt es sich bei dieser Lösung um eine Kombination der Gegenstände gemäß Figur 3 und Figur 24. Hier ist nämlich das eine sägezahnartige Klemm- bzw. Verkrallungsstruktur bringende Paket aus Verriegelungsplatten 4 vereint mit der mediendruckabhängigen Sicherung.

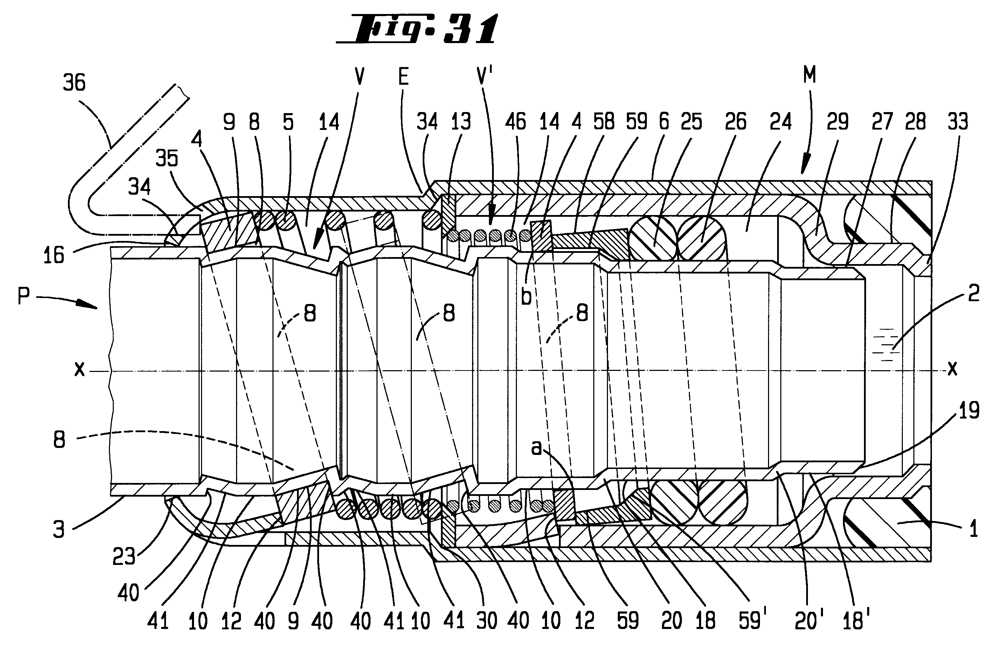

Die dazu erörterten Wirkungen lassen sich auf das Ausführungsbeispiel der Figuren 28 und 29 lesen. Die Bezugsziffern sind sinngemäß angewandt, jedoch zum Teil ohne textliche Wiederholungen. Konkret ist so vorgegangen, daß das hier nur von einem einzelnen Dichtungsring 25 gebildete Verschiebeelement in die Fuge zwischen zwei Verriegelungsplatten 4 eingesetzt ist. Die dortige Ringdichtung 25 erstreckt sich zwischen der in Steckrichtung des Stecknippels 3 letzten Verriegelungsplatte 4 und den in Gegenrichtung vorgelagerten Verriegelungsplatten 4. Es sind insgesamt vier Verriegelungsplatten vorgelagert, wobei natürlich auch hier die Betätigungshandhaben-Platte 4' in die erstrebte Krall- bzw. Klemmwirkung mit einbezogen ist.

Wie den Zeichnungsfiguren entnehmbar, belastet die gehäuseseitig abgestützte Druckfeder 5 die in Steckrichtung des Stecknippels 3 liegende, letzte Verriegelungsplatte 4 außenseitig, und zwar wiederum im Sinne der beschriebenen Kippverlagerung, welche das Plattenpaket aufgrund des Anschlags 12 einnimmt.

Beim dargestellten Ausführungsbeispiel geht das aus einem Rohr gebildete Matrizenteil M rechtsseitig in einen Adapter 50 über. Der kann schraubtechnisch zugeordnet werden oder aber verpreßt sein. Sein Außengewinde trägt das Bezugszeichen 51. Weiter besitzt der Adapter 50 ein Innengewinde 52 für einen nicht dargestellten Anschlußstutzen.

Über einen O-Dichtungsring 53 wird eine leckfreie Zuordnung des Adapters 50 erreicht.

Der Adapter besitzt ferner eine zentrale Durchbrechung 54 für das Medium 2. In dieser Durchbrechung 54, die etwa im lichten Durchmesser des Stecknippels 3 liegt, befindet sich eine Aufnahmehöhlung 55 für das dortige Ende des Stecknippels 3. Die Aufnahmehöhlung 55 beläßt einen ringförmigen Spalt 27, so daß auch hier das Druckmedium einen Zugang zur Beaufschlagung des zwischengefaßten Verschiebeelements, sprich der Ringdichtung 25, hat. Die Druckfeder 5 stützt sich einerends auf der Außenseite der in Steckrichtung letzten Verriegelungsplatte 4 ab und andererseits auf einer gehäusefesten Ringschulter 56, hier gebildet von der dortigen Stirnfläche des Adapters 50.

Die Funktion dieser Verriegelungseinrichtung V ist wie wie folgt: Die Verriegelungsplatte 4 in Verbindung mit der Druckfeder 5 wirkt bei dieser Kupplung in bereits geoffenbarter Weise. Neu ist, daß der Verriegelungsmechanismus sich im Wirkungsbereich des unter Druck stehenden Mediums 2 befindet. Letzteres läßt über das zinnenartig gestaltete freie Ende des Stecknippels 3 den entsprechenden Weg zur Federkammer 14 frei, obwohl das besagte Ende anschlagbegrenzt gegen eine Innenschulter der Aufnahmehöhlung 55 tritt. Das die Krall- bzw. Klemmwirkung bringende Paket befindet sich unter Schrägstellung des Verschiebeelements in der in Figur 28 wiedergegebenen Wirkstellung. Nach Druckentlastung läßt sich sodann über die von außen her zugängliche Betätigungshandhaben-Platte 4' das gesamte Sperreingerichte in die aus Figur 29 ersichtliche sogenannte Normalstellung kippen. Das geschieht um den Anschlag 12. 4' ist auch in der Normallage anschlagbegrenzt, indem die Öffnung 37 von entsprechender Länge ist und in Steckrichtung einen Anschlag 57 formt. Es kann also keine in Gegenrichtung orientierte Klemmwirkung erzeugt werden. Der Stecknippel 3 läßt sich frei ziehen.

Nach Entfernen des Stecknippels 3 kippt das Eingerichte der Steckkupplung in die aus Figur 3 ersichtliche Stellung. Das Verschiebeelement (die Ringdichtung 25) macht diese Bewegung mit aufgrund der Kraft der Druckfeder 5.

Nun zur Verriegelungseinrichtung V an der Steckkupplung, wie sie in den Figuren 30 und 31 dargestellt ist: Diese Ausführungsform verkörpert eine Lösung, bei der alle drei Grundprinzipien Anwendung finden, also Verkrallung an der Mantelfläche 10, formschlüssige Verrastung am Zwischenabschnitt 41 und mediendruckabhängige Steuerung der Krall- bzw. Klemmfunktion, wobei hier noch ein weiteres Element hinzukommt, nämlich das einer Vor-Rast.

Die Bezugsziffern sind auch hier sinngemäß angewandt, ohne jedoch die entsprechenden Grundprinzipien noch einmal detailliert zu erläutern. Der Stecknippel 3 besitzt zwei axial hintereinanderliegende Zwischenabschnitte 41, welche je zwei Verriegelungsstufen 40 bilden. Zugrunde liegt hier ein kegelstumpfförmiger Zwischenabschnitt 41. Sowohl in der in Figur 30 dargestellten formschlüssigen Vor-Rast als auch in der in Figur 31 herbeigeführten Haupt-Rast legt sich die kippbeweglich gelagerte Verriegelungsplatte 4 in die entsprechend fesselnde Schräglage, entgegen Einsteckrichtung abgestützt durch den Anschlag 12.

Den beiden koaxial hintereinander angeordneten Raststellungen in Einsteckrichtung des Stecknippels 3 vorgelagert befindet sich die Mantelfläche 10 für die das zweite Verriegelungssystem bildende Verriegelungsplatte 4. Die im wesentlichen zylindrische Mantelfläche 10 geht im Anschluß an den abgesetzten, mit den Verschiebeelementen, sprich Dichtringen 25, 26 zusammenwirkenden Einsteckquerschnitt 18 in einen nochmals abgesetzten Endabschnitt 18' über. Der ragt frei, also unter Belassung des mantelwandseitigen Spaltes 27 in das Innere der Innenhülse 28.

Die Übergangsstufe zwischen der Mantelfläche 10 und dem in Dichtungsanlage zu den Dichtringen 25, 26 bringbaren Einsteckquerschnitt 18 heißt auch hier 20. Die Übergangsstufe zwischen 18 und 18' ist dagegen mit 20' bezeichnet.

Es handelt sich jeweils um einen Versatz im Maße der Wandungsdicke des auch hier für den Stecknippel 3 verwendeten Rohres.

Beim achten Ausführungsbeispiel liegt der dem Stecknippel 3 näherliegende Dichtring 25 nicht, wie in Figur 24 dargestellt, unmittelbar an der Verriegelungsplatte 4 des zweiten Verriegelungssystems an; vielmahr ist diesbezüglich so vorgegangen, daß zwischen den Verschiebeelementen (Dichtringen 25, 26) und der dortigen Verriegelungsplatte 4 ein Distanzstück 58 eingesetzt ist. Es handelt sich um einen Ring. Dessen nach auswärts weisende Stirnfläche belastet die korrespondierende Gegenfläche der Verriegelungsplatte 4, die andere, flächenbreitere Stirnfläche bildet dagegen die Anlagefläche für den dortigen, ersten Dichtring 25 der Verschiebeelemente. Die entsprechende Verbreiterung resultiert aus einer bestimmten Querschnittsgestalt der Wandung des ringförmigen Distanzstücks 58. Dieses unter Mediendruck mit der Verriegelungsplatte 4 des zweiten Verriegelungssystems mitkippende bzw. dessen Kippbewegung veranlassende Distanzstück 58 besitzt eine konische Ringhöhlung 59. Die rotationssymmetrische Weitung aufgrund der konischen Ausbildung liegt entgegen der Steckrichtung des Stecknippels. Die Höhlung 59 schafft einen so genügenden Abstand zur Mantelwand des Einsteckquerschnitts 18, daß hier Berührungsfreiheit vorliegt, selbstredend auch zum noch weiter querschnittsreduzierten, abgesetzten Endabschnitt 18' des freien Endes des Stecknippels 3. Die Mantelfläche dieses abgesetzten Endabschnitts 18' hebt auch gegenüber den Dichtringen 25, 26 ab. Die Dichtung zwischen beiden Körpern ergibt sich erst, wenn der Einsteckquerschnitt 18 weiter eingerückt ist (vergl. Figur 31). Die Höhlung 59 geht rechtsseitig in einen Trichterabschnitt 59' über, der einen Winkel von ca. 45° einnimmt.

Die periphere Abstützung des Distanzstücks 58 findet an der Innenwandung der Innenhülse 28 statt. Diese Abstützsituation ist aus Figur 31 erkennbar. Obwohl dort das Distanzstück 58 aus Gründen der Gravität unterseitig anliegt, kommt es nicht zu einem Kontakt der besagten Ringhöhlung 59 an der Mantelfläche des Stecknippels. Es ist ein verkratzungsfreies Einführen des Stecknippels 3 gegeben.

Die Funktion ist wie folgt: Durch Einführen des Stecknippels 3 in das Matrizenteil M passiert der exponierte Endabschnitt 18' praktisch berührungsfrei die Öffnung 8 der Verriegelungsplatte 4. Unter Durchtritt des Einsteckquerschnitts 18 und erst recht der Mantelfläche 10 wird die schrägstehende Verriegelungsplatte entgegen der Kraft der Druckfeder 5 um den Anschlag 12 gekippt. Es kommt dabei schließlich zu der in Figur 30 dargestellten Vor-Rast. In dieser sind Patrizenteil P und Matrizenteil M praktisch provisorisch steckverbunden.

Im Anschluß daran wird durch weiteres Einschieben des Stecknippels 3 die Haupt-Rast erzielt, wie sie sich aus Figur 31 ergibt. In dieser Stellung wirkt die Verriegelungsplatte 4 formschlüssig mit der zweiten Raststufe zusammen. In dieser Stellung ist aber auch schon die Mantelfläche 10, welche das zweite Verriegelungssystem mitbildet, in den Wirkbereich der Verriegelungsplatte 4 getreten. Letztere nimmt aber, aufgrund der sie in Steckrichtung des Stecknippels 3 belastenden Druckfeder 46 dieses zweiten Verriegelungssystems die Normallage zur Längsmittelachse x-x der Steckkupplung ein. Diese Normallage ergibt sich aus Figur 30 und bleibt so lange erhalten, bis unter Druck stehendes Medium 2 fließt. Das führt sich, wie schon im Zusammenhang mit Figur 25 erläutert, über den Spalt 27 in die Dichtungskammer 24 ein. Es kommt zum Verschieben bzw. Verkippen der Verschiebeelemente, sprich Dichtringen 25, 26 entgegen der Einsteckrichtung und entgegen der schwächeren Kraft der Druckfeder 46. Die Verriegelungsplatte 4 des zweiten Verriegelungssystems gelangt in die klemmaktive Kipplage, wie in Figur 31 dargestellt, und zwar via Distanzstück 58.

Ein in Achsrichtung liegender Freigang innerhalb der Innenhülse 28 eröffnet auch hier eine aktive bzw. die Federkraft der Drcukfeder 46 unterstützende Einschubbewegung des Stecknippels 3, so daß über die Schulter 20 bzw. die Stoßstufe 47 die Verriegelungsplatte 4 des zweiten Verriegelungssystems wieder in die Ausgangsposition zurückgedrückt werden kann unter Zurückschieben der Dichtringe 25, 26.

Das endgültige Entkuppeln unter Freigabe des ersten Verriegelungssystems, hier in formschlüssiger Ausbildung realisiert, geschieht sodann unter Verwendung des erläuterten Werkzeuges 36.

Zusammenfassend ist es also so, daß zwischen den beiden Verriegelungssystemen am Stecknippel 3 eine weitere, zweite Raststellung für das erste Verriegelungssystem vorgesehen ist, deren Abstand zur ersten Raststellung so bemessen ist, daß bei Verriegelung des ersten Verriegelungssystems in der zweiten Raststellung der Dichtschluß zwischen den Richtringen 25, 26 einerseits und dem Stecknippel andererseits aufgehoben ist. Dabei ist es bezüglich des zweiten Verriegelungssystems, realisiert durch die klemmend wirkende Verriegelungsplatte, so, daß der Stecknippel 3 im Wirkbereich des zweiten Verriegelungssystems so durchmessergestaffelt ist, daß der Wirkdurchmesser des zweiten Verriegelungssystems größer ist als der Wirkdurchmesser des Dichtungssystems, wobei zwischen der Verriegelungsplatte 4 des zweiten Verriegelungssystems und den Dichtringen 25, 26 das Distanzstück 58 vorgesehen ist.

Soll die Druckfeder 5 oder sollen die Druckfedern 5 und 46 vor Korrosion geschützt eingelagert sein, kann am vorderen Ende des Nippels 3 eine Dichtung und am öffnungsseitigen Ende des Matrizenteils M eine Dichtung liegen, hier beispielsweise zwischen zwei Verriegelungsplatten 4 angeordnet.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Verriegelungseinrichtung (V) an Steckkupplungen für Rohre, Schläuche (1) oder dergleichen, bei welcher das Patrizenteil (P, Stecknippel 3) in Einsteckposition eine Öffnung (8) einer im Matrizenteil (M, Kupplungsgehäuse 6) abgefedert verlagerbaren Verriegelungsplatte (4) durchsetzt und durch Angriff der Öffnungsrandkante (9) auf der Mantelfläche (10) des Patrizenteils (P) verriegelt ist, gekennzeichnet durch eine gelenkzapfenfreie Verlagerung der Verriegelungsplatte (4) in die Verriegelungsstellung.

2. Verriegelungseinrichtung nach Anspruch 1 oder insbesondere danach, gekennzeichnet durch eine gelenkzapfenfreie Kippverlagerung der Verriegelungsplatte (4) in die Verriegelungsstellung.

3. Verriegelungseinrichtung nach einem oder mehreren der vorhergehenden Ansprüche oder insbesondere danach, gekennzeichnet durch eine gelenkzapfenfreie Schiebeverlagerung der Verriegelungsplatte (4) in einem Querschacht (11) des Matrizenteil-Kupplungsgehäuses (6).

4. Verriegelungseinrichtung nach einem oder mehreren der vorhergehenden Ansprüche oder insbesondere danach, dadurch gekennzeichnet, daß die Verriegelungsplatte (4) von einer im Matrizenteil (M) angeordneten, vom Patrizenteil (P) durchsetzten Druckfeder (5) abgestützt und gegen einen Anschlag (12) gehalten bzw. gedrückt ist, der eine spitzwinklige Stellung der Ebene der Verriegelungsplatte (4) zur Längsmittelachse (x-x) des Matrizenteils (M) erzwingt, derart, daß die Öffnung (9) der Verriegelungsplatte (4) noch fluchtend zum verjüngten Einsteckquerschnitt (18) des Patrizenteiles (P) verläuft.

5. Verriegelungseinrichtung nach einem oder mehreren der vorhergehenden Ansprüche oder insbesondere danach, dadurch gekennzeichnet, daß die Druckfeder (5) exzentrisch zur Längsmittelachse (x-x) des Matrizenteils (M) liegt.

6. Verriegelungseinrichtung nach einem oder mehreren der vorhergehenden Ansprüche oder insbesondere danach, dadurch gekennzeichnet, daß die Öffnungsrandkanten (9) sich unter teilweiser Verlagerung/Abhebung der Verriegelungsplatte (4) am Anschlag (12) auf der Mantelfläche (10) des Patrizenteils (P) verkrallen.

7. Verriegelungseinrichtung nach einem oder mehreren der vorhergehenden Ansprüche oder insbesondere danach, dadurch gekennzeichnet, daß der Verkrallungsbereich einen Mittelabschnitt des Patrizenteils (P) bildet, der sich stufenförmig vom den verjüngten Einsteckquerschnitt (18) bildenden Endabschnitt in einen Anschlußabschnitt (22) des Patrizenteils (P) absetzt.

8. Verriegelungseinrichtung nach einem oder mehreren der vorhergehenden Ansprüche oder insbesondere danach, dadurch gekennzeichnet, daß die Übergangsstufe (21) vom Mittelabschnitt zum Anschlußabschnitt (22) sich an der Randkante (23) der Einstecköffnung (16) des Matrizenteils (M) zentriert.

9. Verriegelungseinrichtung nach einem oder mehreren der vorhergehenden Ansprüche oder insbesondere danach, dadurch gekennzeichnet, daß der Mittelabschnitt mit Verriegelungsstufen (40) ausgestattet ist.

10. Verriegelungseinrichtung nach einem oder mehreren der vorhergehenden Ansprüche oder insbesondere danach, dadurch gekennzeichnet, daß die Verriegelungsstufen (40) einen kegelstumpfförmigen Zwischenabschnitt (41) belassen.

11. Verriegelungseinrichtung nach einem oder mehreren der vorhergehenden Ansprüche oder insbesondere danach, dadurch gekennzeichnet, daß die Verriegelungsstufen (40) einen Zwischenabschnitt (41) belassen, dessen axial gerichteter Verlauf der Mantelwand sich aus drei trapezförmig zueinander stehenden Flanken zusammensetzt.

12. Verriegelungseinrichtung nach einem oder mehreren der vorhergehenden Ansprüche oder insbesondere danach, dadurch gekennzeichnet, daß die Verriegelungsstufen (40) einen gewölbten Zwischenabschnitt (41) belassen.

13. Verriegelungseinrichtung nach einem oder mehreren der vorhergehenden Ansprüche oder insbesondere danach, dadurch gekennzeichnet, daß die eine Verriegelungsstufe (40) der Kippstellung der Verriegelungsplatte (4) entsprechend geneigt verläuft.

14. Verriegelungseinrichtung nach einem oder mehreren der vorhergehenden Ansprüche oder insbesondere danach, dadurch gekennzeichnet, daß die Randkante (9) der Öffnung (8) der Verriegelungsplatte (4) mit einem Teilabschnitt jenseits der Verriegelungsstufe (41) liegt.

15. Verriegelungseinrichtung nach einem oder mehreren der vorhergehenden Ansprüche oder insbesondere danach, dadurch gekennzeichnet, daß der eine Endgang der Druckfeder (5) entsprechend der spitzwinkligen Stellung der Verriegelungsplatte (4) ausgerichtet verläuft.

16. Verriegelungseinrichtung nach einem oder mehreren der vorhergehenden Ansprüche oder insbesondere danach, gekennzeichnet durch eine der Verriegelungsplatte (4) benachbart liegende Werkzeug-Einstecköffnung (35) des Matrizenteils (M).

17. Verriegelungseinrichtung nach einem oder mehreren der vorhergehenden Ansprüche oder insbesondere danach, dadurch gekennzeichnet, daß der Verriegelungsplatte (4) eine durch eine Öffnung (37) des Matrizenteils (M) nach außen reichende Betätigungshandhabe (38) zugeordnet ist.

18. Verriegelungseinrichtung nach einem oder mehreren der vorhergehenden Ansprüche oder insbesondere danach, dadurch gekennzeichnet, daß die Betätigungshandhabe (38) Teil einer der Verriegelungsplatte (4) benachbarten Platte (4') ist.

19. Verriegelungseinrichtung nach einem oder mehreren der vorhergehenden Ansprüche oder insbesondere danach, dadurch gekennzeichnet, daß die Betätigungshandhaben-Platte (4') ebenfalls als Verriegelungsplatte (4) ausgebildet ist.

20. Verriegelungseinrichtung nach einem oder mehreren der vorhergehenden Ansprüche oder insbesondere danach, gekennzeichnet durch mehrere anliegend hintereinander angeordnete Verriegelungsplatten (4), derart, daß deren Öffnungsrandkanten (9) sägezahnartig zueinander liegen.

21. Verriegelungseinrichtung nach einem oder mehreren der vorhergehenden Ansprüche oder insbesondere danach, gekennzeichnet durch eine unrunde Gestalt der Öffnungsränder (9) und/oder der Umrißform der Verriegelungsplatte (4).

22. Verriegelungseinrichtung nach einem oder mehreren der vorhergehenden Ansprüche oder insbesondere danach, dadurch gekennzeichnet, daß sich das der Verriegelungsplatte (4) abgewandte Ende der Druckfeder (5) an einer Trennwand (13) abstützt, welche vor einer Dichtungskammer (24) des Matrizenteils (M) liegt.

23. Verriegelungseinrichtung nach einem oder mehreren der vorhergehenden Ansprüche oder insbesondere danach, dadurch gekennzeichnet, daß die Verriegelungsplatte (4) beiderends aus dem Querschacht (11) herausragt und das eine, in Richtung der Längsmittelachse (x-x) des Matrizenteils (M) abgewinkelte Ende sich auf der Mantelfläche des Matrizenteils (M) federnd abstützt.

24. Verriegelungseinrichtung nach einem oder mehreren der vorhergehenden Ansprüche oder insbesondere danach, dadurch gekennzeichnet, daß das andere Ende eine umgebogene Fesselungsnase (44) bildet.

25. Verriegelungseinrichtung nach einem oder mehreren der vorhergehenden Ansprüche oder insbesondere danach, dadurch gekennzeichnet, daß die Öffnungsrandkante (9) der im Querschacht (11) verschieblichen Verriegelungsplatte (4) gegen eine Verriegelungsstufe (40) eines vorzugsweise kegelstumpfförmigen Aussteuerungsabschnitts (42) des Patrizenteils (P) tritt.

26. Verriegelungseinrichtung nach einem oder mehreren der vorhergehenden Ansprüche oder insbesondere danach, dadurch gekennzeichnet, daß die Kontur der Öffnung (8) der Verriegelungsplatte (4) nur über einen Teilumfang der Mantelflächenkrümmung des Patrizenteils (P) entspricht und auf dem restlichen Abschnitt mit Abstand (y) zur Mantelfläche (10) verläuft, wobei der Abstand (y) in Richtung der Federbelastung der Verriegelungsplatte (4) liegt.

27. Verriegelungseinrichtung nach einem oder mehreren der vorhergehenden Ansprüche oder insbesondere danach, dadurch gekennzeichnet, daß der verjüngte Endabschnitt des Patrizenteils (P) sich in einer Innenhülse (28) des Matrizenteils zentriert.

28. Verriegelungseinrichtung nach einem oder mehreren der vorhergehenden Ansprüche oder insbesondere danach, dadurch gekennzeichnet, daß die Kippverlagerung der Verriegelungsplatte (4) aus dem Druck des die Steckkupplung durchströmenden Mediums (2) resultiert, und zwar entgegen einer schwächeren Druckfeder (46).

29. Verriegelungseinrichtung nach einem oder mehreren der vorhergehenden Ansprüche oder insbesondere danach, dadurch gekennzeichnet, daß eine druckmedienabhängig kippverlagerte Verriegelungsplatte (4) axial nachgeordnet ist einer federkraftbelasteten Verriegelungsplatte (4).

30. Verriegelungseinrichtung nach einem oder mehreren der vorhergehenden Ansprüche oder insbesondere danach, dadurch gekennzeichnet, daß die druckmedienabhängig verlagerbare Verriegelungsplatte (4) sich einseitig an einem Anschlag (12) einer Innenhülse (28) des Matrizenteils (M) abstützt und von mindestens einem druckmedienbeaufschlagten Verschiebeelement in Richtung einer Kippverlagerung um die Anschlaganlage (Anschlag 12) belastet ist.

31. Verriegelungseinrichtung nach einem oder mehreren der vorhergehenden Ansprüche oder insbesondere danach, dadurch gekennzeichnet, daß das Verschiebeelement zugleich eine Radialdichtung zwischen Patrizenteil (P) und Matrizenteil (M) ist.

32. Verriegelungseinrichtung nach einem oder mehreren der vorhergehenden Ansprüche oder insbesondere danach, gekennzeichnet durch zwei in der Innenhülse (28) hintereinander angeordnete Dichtungsringe (25, 26) als Radialdichtung.

33. Verriegelungseinrichtung nach einem oder mehreren der vorhergehenden Ansprüche oder insbesondere danach, dadurch gekennzeichnet, daß die beiden Radialdichtungen in einer Dichtungskammer (24) angeordnet sind, die eine durch Einziehung der Innenhülse (28) gebildete Rückwand (29) aufweist, welche Einziehung einen Spalt (27) zum Endbereich des Patrizenteils (P) hin beläßt.

34. Verriegelungseinrichtung nach einem oder mehreren der vorhergehenden Ansprüche oder insbesondere danach, gekennzeichnet durch eine Stoßstufe (47) am Patrizenteil (P) zur Rückverlagerung der druckmedienabhängig kippbaren Verriegelungsplatte (4) und Rückverlagerung des Verschiebeelements.

35. Verriegelungseinrichtung nach einem oder mehreren der vorhergehenden Ansprüche oder insbesondere danach, dadurch gekennzeichnet, daß die Stoßstufe (47) mit Abstand (A) von der Klemmstelle (b) der druckmittelabhängig verlagerbaren Verriegelungsplatte (4) am Patrizenteil (P) liegt.

36. Verriegelungseinrichtung nach einem oder mehreren der vorhergehenden Ansprüche oder insbesondere danach, dadurch gekennzeichnet, daß die Verriegelungseinrichtung (V) an einer Steckverschlußkupplung (Figur 27) ausgebildet ist.

37. Verriegelungseinrichtung nach einem oder mehreren der vorhergehenden Ansprüche oder insbesondere danach, dadurch gekennzeichnet, daß das Verschiebeelement (Ringdichtung 25) zwischen Verriegelungsplatten (4) liegt.

38. Verriegelungseinrichtung nach einem oder mehreren der vorhergehenden Ansprüche oder insbesondere danach, dadurch gekennzeichnet, daß das Verschiebeelement (Ringdichtung 25) zwischen der in Steckrichtung des Stecknippels (3) letzten Verriegelungsplatte (4) und den restlichen Verriegelungsplatten (4) liegt.

39. Verriegelungseinrichtung nach einem oder mehreren der vorhergehenden Ansprüche oder insbesondere danach, dadurch gekennzeichnet, daß der Stecknippel (3) zwei axial hintereinanderliegende Zwischenabschnitte (41) mit je zwei Verriegelungsstufen (40) aufweist.

40. Verriegelungseinrichtung nach einem oder mehreren der vorhergehenden Ansprüche oder insbesondere danach, dadurch gekennzeichnet, daß die den beiden Zwischenabschnitten (41) in Steckrichtung vorgelagerte Mantelfläche (10) für die Verriegelungsplatte (4) im Anschluß an den abgesetzten, mit den Verschiebeelementen (Dichtringen 25, 26) zusammenwirkenden Einsteckquerschnitt (18) in einen nochmal abgesetzten Endabschnitt (18') ausläuft, der umströmungsfrei in die Innenhülse (28) ragt.

41. Verriegelungseinrichtung nach einem oder mehreren der vorhergehenden Ansprüche oder insbesondere danach, dadurch gekennzeichnet, daß zwischen den Verschiebeelementen (Dichtringen 25, 26) und der Verriegelungsplatte (4) ein Distanzstück (58) liegt.

42. Verriegelungseinrichtung nach einem oder mehreren der vorhergehenden Ansprüche oder insbesondere danach, dadurch gekennzeichnet, daß das mitkippende Distanzstück (58) die Mantelwand (10) frei übergreifend eine konische, entgegen Steckrichtung des Stecknippels (3) weitende Ringhöhlung (59) aufweist.
